# EUROPÄISCHE PATENTSCHRIFT

(11) **EP 2 585 498 B1**
(45) Veröffentlichungstag und Bekanntmachung des Hinweises auf die Patenterteilung: **30.05.2018**
(21) Anmeldenummer: 11726809.4
(22) Anmeldetag: 22.06.2011
(51) Int. Cl.: C08F 8/44, C08F 8/32, C10L 10/00, C10L 10/18, C10L 1/236

(54) **QUATERNISIERTES COPOLYMERISAT**
QUATERNIZED COPOLYMER
COPOLYMÈRE QUATERNISÉ

(30) Priorität: 25.06.2010 EP 10167372
(43) Veröffentlichungstag der Anmeldung: 01.05.2013
(73) Patentinhaber: BASF SE, 67056 Ludwigshafen am Rhein (DE)
(72) Erfinder: GRABARSE, Wolfgang, 68163 Mannheim (DE); KÖNIG, Hannah Maria, 68161 Mannheim (DE); TOCK, Christian, 05865 Alzingen Luxemburg (LU); RÖGER-GÖPFERT, Cornelia, 68723 Schwetzingen (DE); VÖLKEL, Ludwig, 67117 Limburgerhof (DE); BÖHNKE, Harald, 68167 Mannheim (DE)
(74) Vertreter: BASF IP Association
(86) Internationale Anmeldenummer: PCT/EP2011/060429
(87) Internationale Veröffentlichungsnummer: WO 2011/161149

(56) Entgegenhaltungen:
- EP-A1- 0 245 674
- WO-A1-2009/140190
- US-A- 5 766 273

## Beschreibung

Die vorliegende Erfindung betrifft die Verwendung eines quaternisierten Copolymerisates, welches durch die Reaktionsschritte
(A) Copolymerisation eines oder mehrerer geradkettiger, verzweigter oder cyclischer ethylenisch ungesättigter C₂- bis C₁₀₀-Kohlenwasserstoffe (Monomer M1), welche einen oder mehrere sauerstoff- oder stickstofffunktionelle Substituenten, die nicht mit Aminen zu Amiden oder Imiden oder mit Alkoholen zu Estern umsetzbar sind, tragen können, mit einer oder mehreren ethylenisch ungesättigten C₃- bis C₁₂-Carbonsäuren oder C₃- bis C₁₂-Carbonsäure-Derivaten (Monomer M2), welche ein oder zwei Carbonsäurefunktionen tragen und mit Aminen zu Amiden oder Imiden oder mit Alkoholen zu Estern umsetzbar sind, zu einem Copolymerisat (CP) mit einem zahlenmittleren Molekulargewicht Mₙ von 500 bis 20.000;
(B) teilweise oder vollständige Amidierung oder Imidierung oder Veresterung der Carbonsäurefunktionen der Einheiten (M2) im Copolymerisat (CP) durch Umsetzung mit einem oder mehreren Oligoaminen (OA) mit 2 bis 6 Stickstoffatomen oder Alkoholaminen (AA), welche jeweils mindestens ein primäres oder sekundäres Stickstoffatom bzw. mindestens eine Hydroxylgruppe und mindestens ein quaternisierbares tertiäres Stickstoffatom enthalten;
(C) teilweise oder vollständige Quaternisierung des mindestens einen tertiären Stickstoffatoms in den OA- oder AA-Einheiten mit mindestens einem Quaternisierungsmittel (QM) ausgewählt aus Epoxiden;
wobei die Schritte (B) und (C) auch in umgekehrter Reihenfolge erfolgen können, so dass die teilweise oder vollständige Amidierung oder Imidierung oder Veresterung der Carbonsäurefunktionen der Einheiten (M2) im Copolymerisat (CP) durch Umsetzung mit den bereits gemäß Reaktionsschritt (C) quaternisierten Oligoaminen (OA) oder Alkoholaminen (AA) erfolgen kann,
in einer Menge von 10 bis 5000 Gew.-ppm in Kraftstoffen zum Betrieb von direkteinspritzenden Dieselmotoren Hierin beschrieben ist auch ein Verfahren zur Herstellung eines solchen quaternisierten Copolymerisates. Hierin beschrieben sind auch Kraftstoffe mit einem Gehalt an solch einem quaternisierten Copolymerisat.

Weiterhin betrifft die vorliegende Erfindung die Verwendung dieses quaternisierten Copolymerisates als Kraftstoffzusatz zur Verringerung oder Verhinderung von Ablagerungen in den Einspritzsystemen von direkteinspritzenden Dieselmotoren, insbesonderen in Common-Rail-Einspritzsystemen, zur Verringerung des Kraftstoffverbrauches von direkteinspritzenden Dieselmotoren, insbesondere von Dieselmotoren mit Common-Rail-Einspritzsystemen, und zur Minimierung des Leistungsverlustes (powerloss) in direkteinspritzenden Dieselmotoren, insbesondere in Dieselmotoren mit Common-Rail-Einspritzsystemen.

Bei direkteinspritzenden Dieselmotoren wird der Kraftstoff durch eine direkt in den Brennraum reichende Mehrloch-Einspritzdüse des Motors eingespritzt und feinst verteilt (vernebelt), anstatt wie beim klassischen (Kammer-)Dieselmotor in eine Vor- oder Wirbelkammer eingeführt zu werden. Der Vorteil der direkteinspritzenden Dieselmotoren liegt in ihrer für Dieselmotoren hohen Leistung und einem dennoch geringen Verbrauch. Außerdem erreichen diese Motoren ein sehr hohes Drehmoment schon bei niedrigen Drehzahlen.

Zur Zeit werden im Wesentlichen drei Verfahren eingesetzt, um den Kraftstoff direkt in den Brennraum des Dieselmotores einzuspritzen: die konventionelle Verteilereinspritzpumpe, das Pumpe-Düse-System (Unit-Injector-System bzw. Unit-Pump-System) und das Common-Rail-System.

Beim Common-Rail-System wird der Dieselkraftstoff von einer Pumpe mit Drücken bis zu 2000 bar in eine Hochdruckleitung, der Common-Rail (wörtlich "gemeinsame Leitung") gefördert. Ausgehend von der Common-Rail laufen Stichleitungen zu den verschiedenen Injektoren, die den Kraftstoff direkt in den Brennraum injizieren. Dabei liegt auf der Common-Rail stets der volle Druck an, was eine Mehrfacheinspritzung oder eine spezielle Einspritzform ermöglicht. Bei den anderen Injektionssystemen ist dagegen nur eine Einspritzung möglich. Die Einspritzung beim Common-Rail wird im Wesentlichen in drei Gruppen unterteilt: (1.) Voreinspritzung, durch die im Wesentlichen eine weichere Verbrennung erreicht wird, so dass harte Verbrennungsgeräusche ("Nageln") vermindert werden und der Motorlauf ruhig erscheint; (2.) Haupteinspritzung, die insbesondere für einen guten Drehmomentverlauf verantwortlich ist; und (3.) Nacheinspritzung, die insbesondere für einen geringen NOₓ-Wert sorgt. Bei dieser Nacheinspritzung wird der Kraftstoff in der Regel nicht verbrannt, sondern durch Restwärme im Zylinder verdampft. Das dabei gebildete Abgas-/Kraftstoffgemisch wird zur Abgasanlage transportiert, wo der Kraftstoff in Gegenwart geeigneter Katalysatoren als Reduktionsmittel für die Stickoxide NOₓ wirkt.

Durch die variable, zylinderindividuelle Einspritzung kann beim Common-Rail-Einspritzsystem der Schadstoffausstoß des Motors, z.B. der Ausstoß von Stickoxiden (NOₓ), Kohlenmonoxid (CO) und insbesondere von Partikeln (Ruß), positiv beeinflusst werden. Dies ermöglicht beispielsweise, dass mit Common-Rail-Einspritzsystemen ausgerüstete Motoren der Euro 4-Norm theoretisch auch ohne zusätzlichen Partikelfilter genügen können.

In modernen Common-Rail-Dieselmotoren können sich unter bestimmten Bedingungen, beispielsweise bei Verwendung von biodieselhaltigen Kraftstoffen oder von Kraftstoffen mit Metall-Verunreinigungen wie Zink-Verbindungen, an den Injektoröffnungen Ablagerungen bilden, die das Einspritzverhalten des Kraftstoffs negativ beeinflussen und dadurch die Performance des Motors beeinträchtigen, d.h. insbesondere die Leistung verringern, aber zum Teil auch die Verbrennung verschlechtern. Die Bildung von Ablagerungen wird durch bauliche Weiterentwicklungen der Injektoren, insbesondere durch die Veränderung der Geometrie der Düsen (engere, konische Öffnungen mit abgerundetem Auslass) noch verstärkt. Für eine dauerhaft optimale Funktionsweise von Motor und Injektoren müssen solche Ablagerungen in den Düsenöffnungen durch geeignete Kraftstoffadditive verhindert oder reduziert werden.

Aufgabe der vorliegenden Erfindung war es daher, Kraftstoffadditive bereitzustellen, die den oben geschilderten Mängeln Abhilfe schaffen, d.h. insbesondere Ablagerungen in den Einspritzsystemen, vor allem in den Injektoren, von direkteinspritzenden Dieselmotoren verhindern oder verringern, den Kraftstoffverbrauch von direkteinspritzenden Dieselmotoren verringern und Leistungsverluste in solchen Motoren minimieren.

Aus dem Stand der Technik sind C₈- bis C₂₀₀-Alkyl- oder -Alkenylbernsteinsäureimide als Detergens-Additive für Kraftstoffe wie Mitteldestillat-Kraftstoffe und Ottokraftstoffe bekannt. So werden in der WO 02/092645 (1) Polyalkenylbernsteinsäureimide wie Polyisobutenylbernsteinsäureimide als Zusätze zu Kraftstoffen wie Dieselkraftstoff, Heizöl oder Ottokraftstoff oder zu Schmiermitteln beschrieben, welche - offensichtlich herstellungsbedingt - bis zu 30 Gew.-% an den entsprechenden Polyalkenylbernsteinsäureamiden oder -halbamiden enthalten können. Diese Polyalkenylbernsteinsäureimide sollen Motorablagerungen und Ablagerungen an den Einspritzdüsen entgegenwirken.

Aus der WO 2006/100083 (2) ist bekannt, dass bestimmte Detergens-Additive die Partikelmenge in den Abgasemissionen von direkteinspritzenden Dieselmotoren wie Dieselmotoren mit Common-Rail-Einspritzsystemen verringern. Als Detergens-Additive werden unter anderem aus Bernsteinsäureanhydrid abgeleitete Gruppierungen mit Hydroxy- und/oder Amino- und/oder Amido- und/oder Imidogruppen enthaltende Additive wie die entsprechenden Derivate von Polyisobutenylbernsteinsäureanhydrid, insbesondere mit aliphatischen Polyaminen, genannt. Bei den Gruppierungen mit Hydroxy- und/oder Amino- und/oder Amido- und/oder Imidogruppen handelt es sich beispielsweise um Carbonsäuregruppen, Säureamide von Monoaminen, Säureamide von Di- oder Polyaminen, die neben der Amidfunktion noch freie Aminogruppen aufweisen, Bernsteinsäurederivate mit einer Säure- und einer Amidfunktion, Carbonsäureimide mit Monoaminen, Carbonsäureimide mit Di- oder Polyaminen, die neben der Imidfunktion noch freie Amingruppen aufweisen, oder Diimide, die durch Umsetzung von Di- oder Polyaminen mit zwei Bernsteinsäurederivaten gebildet werden.

In der EP 1 887 074 A1 (3) wird ein Verfahren zur Entfernung oder Reduzierung von Injektor-Ablagerungen in Dieselmotoren unter Verwendung von Reaktionsprodukten zwischen einer hydrocarbyl-substituierten Bernsteinsäure oder ihrem Anhydrid, beispielsweise Polyisobutenylbernsteinsäureanhydrid, und Hydrazin beschrieben. Unter diesen Reaktionsprodukten werden auch Halbhydrazid-Strukturen genannt.
In der WO 2006/135881 (4) wird die Kondensation von hydrocarbylsubstituierten Acylierungsmitteln, welche durch En-Reaktion von Olefinen mit Maleinsäureanhydrid erhältlich sind, mit Aminen mit einer zusätzlichen tertiären Aminogruppe und anschließende Quaternisierung der tertiären Aminogruppe zu quaternären Ammoniumsalzen beschrieben, die als Kraftstoffadditive zur Reinigung und Reinerhaltung von Einlaßsystemen von Verbrennungsmotoren geeignet sind.

US5766237 offenbart eines Imides aus einem Copolymerisat auf der Basis eines alpha -Olefins und einer ethylenisch ungesättigten Dicarbonsäure und einem Polyamin und ihre Verwendung als Zusatz für Erdölmitteldestillate. Die in den Copolymerisaten enthaltenen sekundären oder tertiären Amingruppen können auch in quaternierter Form vorliegen, z. B. durch Umsetzung der Imide mit anorganischen oder organischen Säuren oder durch Alkylierung mit bekannten Alkylierungsreagenzien. Die erfindungsgemässen Polymermischungen finden Verwendung als Zusatz für Erdölmitteldestillate, worunter Petroleum, Heizöl und Dieselkraftstoffe erstanden werden. Die Menge an Polymermischung in den Erdölmitteldestillaten beträgt in der Regel 10 bis 10000 ppm.

Die oben beschriebenen aus dem Stand der Technik bekannten und in der Praxis häufig eingesetzten C₈- bis C₂₀₀-Alkyl- oder -Alkenylbernsteinsäureimide wie Polyisobutenylbernsteinsäureimide und verwandte Systeme sind zur Lösung der geschilderten speziellen Aufgabe nur in unzureichendem Umfang in der Lage; allerdings schadet ihre Mitverwendung bei der vorliegenden Erfindung als weitere Kraftstoffadditive in untergeordneter Menge nicht.

Diese Aufgabe wird durch den Einsatz des eingangs genannten quaternisierten Copolymerisates, welches durch die Reaktionsschritte (A), (B) und (C) erhältlich ist, gelöst. Hierin beschrieben ist auch ein Verfahren zur Herstellung eines quaternisierten Copolymerisates, welches dadurch gekennzeichnet ist, dass man die folgenden Reaktionsschritte durchführt:
(A) Copolymerisation eines oder mehrerer geradkettiger, verzweigter oder cyclischer ethylenisch ungesättigter C₂- bis C₁₀₀-Kohlenwasserstoffe (Monomer M1), welche einen oder mehrere sauerstoff- oder stickstofffunktionelle Substituenten, die nicht mit Aminen zu Amiden oder Imiden oder mit Alkoholen zu Estern umsetzbar sind, tragen können, mit einer oder mehreren ethylenisch ungesättigten C₃- bis C₁₂-Carbonsäuren oder C₃- bis C₁₂-Carbonsäure-Derivaten (Monomer M2), welche ein oder zwei Carbonsäurefunktionen tragen und mit Aminen zu Amiden oder Imiden oder mit Alkoholen zu Estern umsetzbar sind, zu einem Copolymerisat (CP) mit einem zahlenmittleren Molekulargewicht Mₙ von 500 bis 20.000;
(B) teilweise oder vollständige Amidierung oder Imidierung oder Veresterung der Carbonsäurefunktionen der Einheiten (M2) im Copolymerisat (CP) durch Umsetzung mit einem oder mehreren Oligoaminen (OA) mit 2 bis 6 Stickstoffatomen oder Alkoholaminen (AA), welche jeweils mindestens ein primäres oder sekundäres Stickstoffatom bzw. mindestens eine Hydroxylgruppe und mindestens ein quaternisierbares tertiäres Stickstoffatom enthalten;
(C) teilweise oder vollständige Quaternisierung des mindestens einen tertiären Stickstoffatoms in den OA- oder AA-Einheiten mit mindestens einem Quaternisierungsmittel (QM);
wobei die Schritte (B) und (C) auch in umgekehrter Reihenfolge erfolgen können, so dass die teilweise oder vollständige Amidierung oder Imidierung oder Veresterung der Carbonsäurefunktionen der Einheiten (M2) im Copolymerisat (CP) durch Umsetzung mit den bereits gemäß Reaktionsschritt (C) quaternisierten Oligoaminen (OA) oder Alkoholaminen (AA) erfolgen kann.

Das im Reaktionsschritt (A) erzeugte Copolymerisat (CP) ist im Prinzip aus der EP-A 307 815 (6) bekannt. Dort wird die Verwendung des Copolymerisates (CP) in Form seiner Alkalimetall- oder Erdalkalimetallsalze zur Verhinderung oder Verminderung von Abnutzungserscheinungen an den Ventilen von Ottomotoren und zur gleichzeitigen Verminderung der Korrosion in Ottomotoren empfohlen.

Als fakultative sauerstoff- oder stickstofffunktionelle Substituten können in den Monomeren (M1) im Reaktionsschritt (A) beispielsweise Ethersauerstoffatome oder Carbonsäureamidgruppierungen auftreten.

In einer bevorzugten Ausführungsform sind die die Monomere (M1) im Reaktionsschritt (A) ausgewählt unter C₂- bis C₄₀-Alkenen, C₃- bis C₁₀-Cycloolefinen, Alkylvinylethern mit 1 bis 30 Kohlenstoffatomen in der Alkylgruppe, Cycloalkylvinylethern mit 3 bis 10 Kohlenstoffatomen in der Alkylgruppe und Oligo- bzw. Polyisobutenen mit 8 bis 96 Kohlenstoffatomen.

Beispiele für gut geeignete geradkettige oder verzweigte C₂- bis C₄₀-Alkene sind Ethylen, Propylen, Buten-1, Isobuten, Penten-1, 3-Methylbuten-1, Hexen-1, 4-Methylpenten-1, 3,3-Dimethylbuten-1, Hepten-1, 4-Methylhexen-1, 5-Methylhexen-1, 4,4-Dimethylpenten-1, Octen-1, 2,4,4-Trimethylpenten-1, 2,4,4-Trimethylpenten-2, Isomerengemisch aus 2,4,4-Trimethyl-penten-1 und 2,4,4-Trimethylpenten-2 ("Diisobuten"), 4,4-Dimethylhexen-1, Decen-1, Dodecen-1, Tetradecen-1, Hexadecen-1, Octadecen-1, C₂₀-Olefin-1, C₂₂-Olefin-1, C₂₄-Olefin-1, C₂₆-Olefin-1, C₂₈-Olefin-1, C₃₀-Olefin-1, C₄₀-Olefin-1, C₂₀₋₂₄-Olefin-1, C_{22/24}-Olefin-1, C₂₄₋₂₈-Olefin-1 sowie Mischungen der genannten Alkene untereinander. Hiervon werden geradkettige oder verzweigte C₁₂- bis C₃₀-Alke-ne, insbesondere geradkettige oder verzweigte C₁₆- bis C₂₆-Alkene, vor allem geradkettige oder verzweigte C₂₀- bis C₂₄-Alkene, bevorzugt.

Beispiele für gut geeignete C₃- bis C₁₀-Cycloolefine sind Cyclobuten, Cyclopenten, Cyclohexen, Cyclohepten und Cycloocten sowie Mischungen der genannten Cycloolefine untereinander. Hiervon werden Cyclopenten und Cyclohexen bevorzugt.

Beispiele für gut geeignete Alkylvinylethern mit 1 bis 30 Kohlenstoffatomen in der geradkettigen oder verzweigten Alkylgruppe sind Methylvinylether, Ethylvinylether, n-Propylvinylether, Isopropylvinyl-ether, n-Butylvinylether, Isobutylvinylether, tert.-Butylvinylether, n-Pentylvinylether, n-Hexylvinylether, 2-Methylpentylvinylether, n-Heptylvinylether, n-Octylvinylether, 2-Ethylhexylvinylether, 2,2,4-Trimethylpentylvinylether, n-Decylvinylether, 2-Propylheptylvinylether, n-Dodecylvinylether, Isododecylvinylether, n-Tridecylvinylether, Isotridecylvinylether, n-Tetradecylvinylether, n-Hexadecylvinylether, n-Octadecylvinylether, n-Eicosylvinylether, n-Docosylvinylether, n-Tetracosylvinylether, n-Hexacosylvinylether, n-Octacosylvinylether, Oleylvinylether sowie Mischungen der genannten Alkylvinylether untereinander. Hiervon werden Alkylvinylether mit geradkettigen oder verzweigten C₈- bis C₂₆-Alkylgruppen, insbesondere geradkettigen oder verzweigten C₁₂- bis C₂₄-Alkylgruppen, vor allem geradkettigen oder verzweigten C₁₆- bis C₂₂-Alkylgruppen, bevorzugt.

Beispiele für gut geeignete Cycloalkylvinylether mit 3 bis 10 Kohlenstoffatomen in der Cycloalkylgruppe sind Cyclobutylvinylether, Cyclopentylvinylether, Cyclohexylvinylether, Cycloheptylvinylether und Cyclooctylvinylether sowie Mischungen der genannten Cycloalkylvinylether untereinander. Hiervon werden Cyclopentylvinylether und Cyclohexylvinylether bevorzugt.

Als Oligo- bzw. Polyisobutene mit 8 bis 96 Kohlenstoffatomen, insbesondere 44 bis 92 Kohlenstoffatomen, kommen vor allem Polyisobutene mit einem hohem Gehalt an endständigen (α-ständigen) Doppelbindungen, typischerweise von mindestens 70 Mol-%, insbesondere von mindestens 80 Mol-%, in Betracht, beispielsweise solche mit einem zahlenmittleren Molekulargewicht Mₙ von 550, 700 oder 1000.

Neben den genannten bevorzugten Monomeren (M1) können beispielsweise auch noch Acrylsäure- oder Methacrylsäureamide wie Acrylsäure-N-(C₁-C₃₀-alkyl)-amide, Acrylsäure-N,N-di-(C₁-C₃₀-alkyl)-amide, Methacrylsäure-N-(C₁-C₃₀-alkyl)-amide oder Methacrylsäure-N,N-di-(C₁-C₃₀-alkyl)-amide als Monomere (M1) eingesetzt werden.

Vorzugsweise tragen die Monomere (M1) im Reaktionsschritt (A) die polymerisierbare ethylenisch ungesättigte Doppelbindung in der α-Position, d.h. im Monomeren (M1) liegt die ethylenisch ungesättigte Doppelbindung endständig in Form des Strukturelementes >C=H₂ vor.

In einer bevorzugten Ausführungsform sind die Monomere (M2) im Reaktionsschritt (A) ausgewählt unter Acrylsäure, Methacrylsäure, Maleinsäure, Fumarsäure und Itaconsäure sowie deren Anhydriden, Halogeniden, d.h. deren Fluoriden, Chloriden, Bromiden oder Iodiden, und Estern, insbesondere deren C₁- bis C₃₀-Alkylestern. Besonders bevorzugt werden Maleinsäure und Maleinsäureanhydrid.

Neben den genannten bevorzugten Monomeren (M2) können beispielsweise auch noch Crotonsäure, Isocrotonsäure, But-1-encarbonsäure, Pent-1-encarbonsäure, Hex-1-encarbonsäure, Hept-1-encarbonsäure, Oct-1-encarbonsäure, Non-1-encarbonsäure, Dec-1-encarbonsäure, Undec-1-encarbonsäure, Citraconsäure oder Mesacronsäure sowie deren Anhydride, Halogenide, d.h. deren Fluoride, Chloride, Bromide oder lodide, und Ester, insbesondere deren C₁- bis C₃₀-Alkylester, als Monomere (M2) eingesetzt werden.

Üblicherweise liegen die die Monomer-Einheiten (M1) und (M2) im Gew.-Verhältnis von 30:70 bis 70:30, insbesondere 40:60 bis 60:40, im Copolymerisat (CP) des Reaktionsschrittes (A) vor.

Das Copolymerisat (CP) weist ein zahlenmittleres Molekulargewicht Mₙ von 500 bis 20.000, insbesondere von 1000 bis 18.000, vor allem von 4000 bis 16.000 (jeweils bestimmt durch Gelpermeationschromatographie), und in der Regel eine Polydispersität (Quotient aus gewichtsmittlerem Molekulargewicht und zahlenmittlerem Molekulargewicht: PDI = M_{w}/Mₙ) von 1,3 bis 10, insbesondere von 1,6 bis 5, vor allem von 2,0 bis 2,5, auf.

Die beiden Monomer-Einheiten (M1) und (M2) liegen im Copolymerisat (CP) in der Regel alternierend oder statistisch verteilt vor. Durch besondere, dem Fachmann bekannte Verfahrensführungen kann man jedoch prinzipiell auch Blockcopolymerisate aus den Monomeren (M1) und (M2) erzeugen.

Die Copolymerisation der Monomere (M1) und (M2) erfolgt in der Regel radikalisch. Sie bedient sich bekannter üblicher Polymerisationstechniken wie der Masse-, Suspensions-, Fällungs- oder Lösungspolymerisation. Sie wird in der Regel mit den üblichen Radikalstartern initiiert, beispielsweise mit Acetylcyclohexansulfonylperoxid, Diacetylperoxidicarbonat, Dicyclohexylperoxidicarbonat, Di-2-ethylhexylperoxidicarbonat, tert.-Butylperneodecanoat, 2,2'-Azobis-(4-methoxy-2,4-dimethylvaleronitril), tert.-Butylperpivalat, tert.-Butylper-2-ethylhexanoat, tert.-Butylpermaleinat, 2,2'-Azobis-(isobutyronitril), Bis-(tert-butylperoxid)-cyclohexan, tert.-Butylperoxiisopropylcarbonat, tert.-Butylperacetat, Dicumylperoxid, Di-tert.-amyperoxid, Di-tert.-butylperoxid, p-Methanhydroperoxid, Cumolhydroperoxid, tert.-Butylhydroperoxid oder Mischungen der genannten Radikalstarter. Üblicherweise werden diese Radikalstarter in Mengen von 0,1 bis 10 Gew.-%, insbesondere 0,2 bis 5 Gew.-%, berechnet auf die Gesamtmenge der eingesetzten Monomere, verwendet.

In der Regel erfolgt die Copolymerisation bei Temperaturen von 40 bis 250°C, insbesondere 80 bis 220°C, wobei bei Verwendung von leicht flüchtigen Monomeren (M1) mit Siedetemperaturen unterhalb der Copolymerisationstemperatur zweckmäßigerweise unter Druck gearbeitet wird. Die Copolymerisation wird üblicherweise unter Luft- bzw. Sauerstoffausschluß durchgeführt, d.h. wenn nicht unter Siedebedingungen gearbeitet werden kann, werden Inertisierungsmitteln wie Stickstoff eingesetzt, da Sauerstoff die Copolymerisation verzögert. Die Mitverwendung von Redox-Coinitiatoren wie beispielsweise Benzoin, Dimethylanilin, Ascorbinsäure sowie organisch löslichen Komplexen von Schwermetallen wie Kupfer, Kobalt, Mangan, Eisen, Nickel und Chrom kann die Copolymerisation beschleunigen.

Zur Steuerung des Molekulargewichtes, insbesondere zur Erzeugung eines Copolymerisates mit relativ niedrigem Molekulargewicht, können Regler mitverwendet werden. Geeignete Regler sind beispielsweise Allylalkohole und organische Mercaptoverbindungen wie 2-Mercaptoethanol, 2-Mercaptopropanol, Mercaptoessigsäure, Mercaptopropionsäure, tert.-Butylmercaptan, n-Octylmercaptan, n-Dodecylmercaptan oder tert.-Dodecylmercaptan, welche üblicherweise in Mengen von 0,1 bis 10 Gew.-%, bezogen auf die Gesamtmenge der eingesetzten Monomere, eingesetzt werden.

Wendet man bei der Herstellung von (CP) die Polymerisationstechnik der Suspensions-, Fällungs- oder Lösungspolymerisation an, ist die Verwendung eines geeigneten inerten Lösungsmittels oder Lösungsmittelgemisches erforderlich. Hierzu eignen sich generell - natürlich immer spezifisch für die jeweils angewandte Polymerisationstechnik - beispielsweise aliphatische und cycloaliphatische Kohlenwasserstoffe wie Pentan, Hexan, Heptan, Octan, Isooctan, Cyclohexan, Methylcyclohexan, Ethylcyclohexan, Dimethylcyclohexan oder Diethylcyclohexan, aromatische Kohlenwasserstoffe wie Toluol, Xylole, Ethylbenzol oder Cumol, technische Gemische aus höhersiedenden aromatischen Kohlenwasserstoffen, wie sie insbesondere unter der Bezeichnung "Solvesso" im Handel erhältlich sind, beispielsweise Solvesso 150 oder Solvesso 200, aliphatische Halogenkohlenwasserstoffe wie Dichlormethan, Chloroform, Tetrachlormethan, 1,1- oder 1,2-Dichlorethan, 1,1,1- oder 1,1,2-Trichlorethan, 1,1,2-Trichlorethylen, Tetrachlorethylen, 1,2-Dichlorpropan, Butylchlorid, 1,1,2-Trichlor-1,2,2-trifluorethan, 1,1,1,2-Tetrachlor-2,2-difluorethan oder 1,1,2,2-Tetra-chlor-1,2-difluorethan und Ether wie Diethylether, Dipropylether, Dibutylether, Methyl-tert.-butylether, Dioxan, Tetrahydrofuran, Diethylenglykoldimethylether sowie Mischungen der genannten Lösungsmittel.

Bei der Fällungspolymerisation und der Suspensionspolymerisation ist die Mitverwendung von Schutzkolloiden zweckmäßig bzw. erforderlich. Schutzkolloide sind meistens polymere Stoffe, welche in den verwendeten Lösungsmittel gut löslich sind und keine Reaktionen mit den Monomeren eingehen. Geeignete Schutzkolloide, die bei der Herstellung von (CP) verwendet werden können, sind beispielsweise Copolymere des Maleinsäureanhydrides mit Vinylalkylethern und/oder Olefinen mit 8 bis 20 Kohlenstoffatomen sowie deren Monoester mit C₁₀- bis C₂₀-Alkoholen oder deren Mono- oder Diamide mit C₁₀- bis C₂₀-Alkylaminen sowie Polyalkylvinylether, deren Alkylgruppe 1 bis 20 Kohlenstoffatome enthält, wie beispielsweise Polymethyl-, Polyethyl-, Polyisobutyl- oder Polyoctadecylvinylether. Die zugesetzten Mengen an Schutzkolloiden liegen üblicherweise bei 0,05 bis 4 Gew.-%, insbesondere 0,1 bis 2 Gew.-%, wobei es oftmals von Vorteil ist, mehrere Schutzkolloide zu kombinieren.

Die nachfolgend abgebildete Reaktionsgleichung zeigt gemäß der vorliegenden Erfindung beispielhaft die Strukturen eines Copolymerisates CP aus C₂₂-Olefin-1 und Maleinsäureanhydrid ("MSA") (wobei "MW" das zahlenmittlere Molekulargewicht Mₙ bedeutet), das zugehörige Amidierungsprodukt mit 3-(N,N-Dimethylamino)-propylamin ("DMPAP") und das zugehörige Quaternisierungsprodukt mit Propylenoxid ("PO") / Essigsäure ("HOAc"):

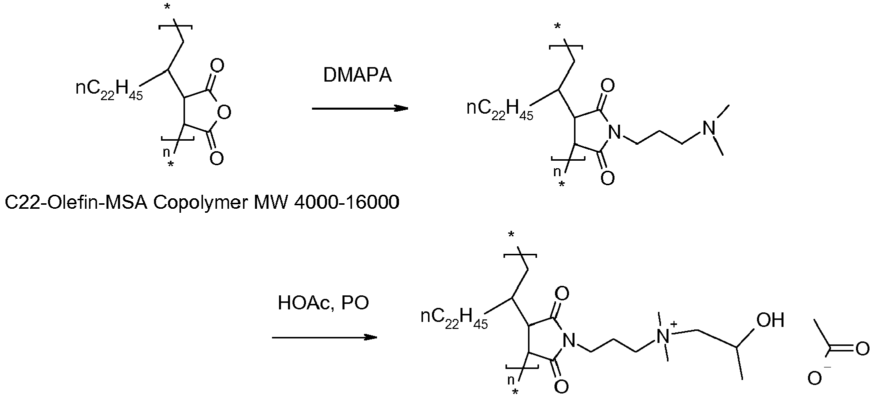

Die im Reaktionsschritt (B) eingesetzten Oligoamine (OA) weisen vorzugsweise insgesamt 2 bis 4 Stickstoffatome, insbesondere insgesamt 2 oder 3 Stickstoffatome, vor allem insgesamt 2 Stickstoffatome auf, wovon in jedem Fall mindestens eines ein quaternisierbares tertiäres Stickstoffatom darstellt.

Die im Reaktionsschritt (B) eingesetzten Alkoholamine (AA) weisen vorzugsweise 1 bis 3 Stickstoffatome, wovon mindestens eines ein quaternisierbares tertiäres Stickstoffatom darstellt, und 1 bis 3 Hydroxylgruppen, insbesondere ein quaternisierbares tertiäres Stickstoffatom und 1 bis 3 Hydroxylgruppen, vor allem ein quaternisierbares tertiäres Stickstoffatom und eine Hydroxylgruppe, auf. Die Hydroxylgruppen sind in der Regel alkoholische Hydroxylgruppen, d.h. sie werden von einem sp³-hybridisierten Kohlenstoffatom getragen.

Die im Reaktionsschritt (B) eingesetzten Oligoamine (OA) und Alkoholamine (AA) weisen üblicherweise eine Gesamtkohlenstoffzahl von maximal 75, insbesondere von maximal 50, vor allem von maximal 30, auf.

Für die teilweise oder vollständige Amidierung oder Imidierung der Carbonsäurefunktionen der Einheiten (M2) in (CP) im Reaktionsschritt (B) eignen sich als Oligoamine (OA) in einer bevorzugten Ausführungsform Verbindungen der allgemeinen Formel (Ia)

R¹R²N-(CH₂)ₙ-NR³R⁴ (Ia)

in der
die Variablen R¹ und R² Wasserstoff oder C₁- bis C₂₀-Alkylgruppen bedeuten, wobei mindestens eine der Variablen R¹ und R² Wasserstoff bedeutet,
die Variablen R³ und R⁴ unabhängig voneinander C₁- bis C₂₀-Alkylgruppen bezeichnen oder zusammen mit dem Stickstoffatom, an das sie gebunden sind, einen gesättigten, teilungesättigten oder ungesättigten Fünfring- oder Sechsring-Heterocyclus bilden und
die Variable n für eine Zahl von 1 bis 12, insbesondere von 2 bis 6, vor allem für die Zahl 2 oder 3, steht.

Für die teilweise oder vollständige Veresterung der Carbonsäurefunktionen der Einheiten (M2) in (CP) im Reaktionsschritt (B) eignen sich als Alkoholamine (AA) in einer bevorzugten Ausführungsform Verbindungen der allgemeinen Formel (Ib)

[HO-(CH₂)ₘ]ₓN(R⁵)_{y}(R⁶)_{z} (Ib)

in der
die Variablen R⁵ und R⁶ unabhängig voneinander C₁- bis C₂₀-Alkylgruppen bezeichnen oder im Falle von y = z = 1 zusammen mit dem Stickstoffatom, an das sie gebunden sind, einen gesättigten, teilungesättigten oder ungesättigten Fünfring- oder Sechsring-Heterocyclus bilden,
die Variable m für eine Zahl von 1 bis 12, insbesondere von 2 bis 6, vor allem für die Zahl 2 oder 3, steht, und
die Variablen x, y und z jeweils für die Zahl 0, 1, 2 oder 3 stehen, wobei die Summe aus x + y + z den Wert 3 ergeben muß.

Als C₁- bis C₂₀-Alkylgruppen, die in den Verbindungen der allgemeinen Formeln (Ia) und (Ib) als Substituenten auftreten können, kommen beispielsweise Methyl, Ethyl, n-Propyl, iso-Propyl, n-Butyl, iso-Butyl, sec.-Butyl, tert.-Butyl, n-Pentyl, sec.-Pentyl, tert.-Pentyl, n-Hexyl, n-Heptyl, n-Octyl, 2-Ethylhexyl, n-Nonyl, iso-Nonyl, 2-Propylheptyl, n-Decyl, n-Dodecyl, n-Tridecyl, iso-Tri-decyl, n-Tetradecyl, n-Hexydecyl, n-Octadecyl und Eicosyl in Betracht. Vorzugsweise treten hierbei C₁- bis C₈-Alkylgruppen, insbesondere C₁- bis C₄-Alkylgruppen auf.

Als gesättigte, teilungesättigte oder ungesättigte Fünfring- oder Sechsring-Heterocyclen, welche die Variablen R³ und R⁴ bzw. R⁵ und R⁶ zusammen mit dem Stickstoffatom, an das sie gebunden sind, bilden können, kommen beispielsweise Imidazole, Benzimidazole, Pyrazole, Imidazoline, Piperazine, Piperidine oder Pyridine in Betracht.

Beispiele für Verbindungen der allgemeinen Formel (Ia) sind 2-(N,N-Dimethylamino)-ethylamin, 2-(N,N-Diethylamino)-ethylamin, 2-(N,N-Di-n-propylamino)-ethylamin, 2-(N,N-Di-isopropylamino)-ethylamin, 2-(N,N-Di-n-butylamino)-ethylamin, 3-(N,N-Dimethylamino)-propylamin, 3-(N,N-Diethylamino)-propylamin, 3-(N,N-Di-n-propylamino)-propylamin, 3-(N,N-Di-isopropylamino)-propylamin, 3-(N,N-Di-n-butylamino)-propylamin, N-(2-Aminoethyl)-imidazol, N-(2-Aminoethyl)-benzimidazol, N-(3-Aminopropyl)-imidazol, N-(3-Aminopropyl)-benzimidazol, N-Methylpiperazin, N-Ethylpiperazin, N-n-Propylpiperazin, N-Isopropylpiperazin und N-n-Butylpiperazin.

Beispiele für die Verbindungen der allgemeinen Formel (Ib) sind Triethanolamin, Tri-n-propanolamin, Tri-isopropanolamin, N-Methyl-diethanolamin, N-Methyl-di-n-propanolamin, N-Methyl-di-isopropanolamin, N,N-Dimethyl-ethanolamin, N,N-Dimethyl-propanolamin, N,N-Dimethyl-isopropanolamin, N-(2-Hydroxyethyl)-imidazol, N-(2-Hydroxyethyl)-benzimidazol, N-(3-Hydroxypropyl)-imidazol, N-(3-Hydroxypropyl)-benzimidazol, N-(2-Hydroxyethyl)-piperidin und N-(3-Hydroxypropyl)-piperidin.

Die Amidierung, Imidierung oder Veresterung gemäß Reaktionsschritt (B) wird üblicherweise in einem geeigneten Lösungsmittel oder Lösungsmittelgemisch durchgeführt, beispielsweise in aliphatischen oder cycloaliphatischen Kohlenwasserstoffen wie Pentan, Hexan, Heptan, Octan, Isooctan, Cyclohexan, Methylcyclohexan, Ethylcyclohexan, Dimethylcyclohexan oder Diethylcyclohexan, aromatischen Kohlenwasserstoffen wie Toluol, Xylolen, Ethylbenzol oder Cumol, technischen Gemische aus höhersiedenden aromatischen Kohlenwasserstoffen, wie sie insbesondere unter der Bezeichnung "Solvesso" im Handel erhältlich sind, beispielsweise Solvesso 150 oder Solvesso 200, aliphatischen Halogenkohlenwasserstoffen wie Dichlormethan, Chloroform, Tetrachlormethan, 1,1- oder 1,2-Dichlorethan, 1,1,1- oder 1,1,2-Trichlorethan, 1,1,2-Trichlorethylen, Tetrachlorethylen, 1,2-Dichlorpropan, Butylchlorid, 1,1,2-Trichlor-1,2,2-trifluorethan, 1,1,1,2-Tetrachlor-2,2-difluorethan oder 1,1,2,2-Tetra-chlor-1,2-difluorethan und Ethern wie Diethylether, Dipropylether, Dibutylether, Methyl-tert.-butylether, Dioxan, Tetrahydrofuran, Diethylenglykoldimethylether sowie in Mischungen der genannten Lösungsmittel.

Bei der Amidierung und der Veresterung arbeitet man in der Regel bei Temperaturen von 20 bis 150°C, insbesondere von 25 bis 120°C; die Umsetzung ist vollständig, wenn alle bei der Umsetzung freiwerdenden flüchtigen Verbindungen wie Wasser, Halogenwasserstoff oder Alkohole entfernt worden sind. Bei der Erzeugung eines Imids arbeitet man beim Reaktionsschritt (B) vorzugsweise zweistufig, indem man zuerst eine Amidierung -wie oben beschrieben - bei Temperaturen von 20 bis 150°C, insbesondere von 25 bis 120°C, durchführt und danach auf höhere Temperaturen, zweckmäßigerweise auf 120 bis 250°C, insbesondere auf 150 bis 200°C, erhitzt; hierbei empfiehlt sich die Verwendung eines entsprechend höhersiedenden Lösungsmittels oder Lösungsmittelgemisches wie Solvesso 150 oder Solvesso 200 und/oder die Anlegung eines Vakuums.

Als Quaternisierungsmittel (QM) für den Reaktionsschritt (C) kommen Epoxiden in Betracht. Hierin beschrieben sind auch Quaternisierungsmittel ausgewählt aus Dialkylsulfaten, Dialkylsulfiten, Alkylhalogeniden, Arylalkylhalogeniden, Alkylcarbonsäureestern und Dialkylcarbonaten.

Als Epoxide eignen sich beispielsweise C₂- bis C₁₂-Alkylenoxide wie Ethylenoxid, Propylenoxid, 1,2-Butylenoxid, 2,3-Butylenoxid, 2-Methyl-1,2-propenoxid (Isobutenoxid), 1,2-Pentenoxid, 2,3-Pentenoxid, 2-Methyl-1,2-butenoxid, 3-Methyl-1,2-butenoxid, 1,2-Hexenoxid, 2,3-Hexenoxid, 3,4-Hexenoxid, 2-Methyl-1,2-pentenoxid, 2-Ethyl-1,2-butenoxid, 3-Methyl-1,2-pentenoxid, 1,2-Decenoxid, 1,2-Dodecenoxid oder 4-Methyl-1,2-pentenoxid sowie aromatensubstituierte Ethylenoxide wie Styroloxid oder 4-Methylstyroloxid.

Epoxiden als Quaternisierungsmittel werden vorzugsweise in Kombination mit Protonensäuren, insbesondere mit C₁- bis C₁₂-Monocarbonsäuren wie Ameisensäure, Essigsäure oder Propionsäure oder C₂- bis C₁₂-Dicarbonsäuren wie Oxalsäure oder Adipinsäure eingesetzt; es eignen sich jedoch auch Sulfonsäuren wie Benzolsulfonsäure oder Toluolsulfonsäure oder wässrige Mineralsäuren wie Schwefelsäure oder Salzsäure.

Als Dialkylsulfate eignen sich vorzugsweise Di-(C₁-C₂₀-alkyl)sulfate, insbesondere Di-(C₁-C₄-alkyl)sulfate, wie Dimethylsulfat oder Diethylsulfat. Man kann nach erfolgter Quaternisierung die als Gegenionen entstandenen Monoalkylsulfate und Sulfate durch Behandlung mit Anionenaustauschern entfernen bzw. austauschen.

Als Dialkylsulfite eignen sich vorzugsweise Di-(C₁-C₂₀-alkyl)sulfite, insbesondere Di-(C₁-C₄-alkyl)sulfite, wie Dimethylsulfit oder Diethylsulfit. Man kann nach erfolgter Quaternisierung die als Gegenionen entstandenen Monoalkylsulfite und Sulfite durch Behandlung mit Anionenaustauschern entfernen bzw. austauschen.

Als Alkylhalogenide eignen sich vorzugsweise C₁-C₂₀-alkylfluoride, -chloride, -bromide oder -iodide, insbesondere C₁-C₄-alkylfluoride, -chloride, -bromide oder -iodide, wie Methylchlorid, Methylbromid, Methyliodid, Ethylchlorid, Ethylbromid oder Ethyliodid. Man kann nach erfolgter Quaternisierung als Gegenionen entstandenen Halogenid-Anionen durch Behandlung mit Anionenaustauschern entfernen bzw. austauschen.

Als Benzylhalogenide eignen sich beispielsweise Benzylchlorid, Benzylbromid oder Benzyliodid; der Benzolkern des Benzylrestes kann im Prinzip noch einen oder mehrere Substituenten wie C₁-C₄-Alkylgruppen tragen. Man kann nach erfolgter Quaternisierung die als Gegenionen entstandenen Halogenid-Anionen durch Behandlung mit Anionenaustauschern entfernen bzw. austauschen.

Als Alkylcarbonsäureester eignen sich vorzugsweise Mono- oder Di-(C₁-C₂₀-alkyl)-mono- oder -dicarbonsäureester, insbesondere Mono- oder Di-(C₁-C₄-alkyl)-mono- oder -dicarbonsäureester, wobei die zugrundeliegende Mono- oder Dicarbonsäure 1 bis 12 bzw. 2 bis 12 Kohlenstoffatome aufweist, beispielsweise Methylformiat oder Dimethyloxalat. Ähnlich wie im Falle der Epoxide ist es bei Verwendung von Alkylcarbonsäureestern als Quaternisierungsmittel oftmals angeraten, diese vorzugsweise in Kombination mit Protonensäuren, insbesondere mit C₁- bis C₁₂-Monocarbonsäuren wie Ameisensäure, Essigsäure oder Propionsäure oder C₂- bis C₁₂-Dicarbonsäuren wie Oxalsäure oder Adipinsäure oder auch Sulfonsäuren wie Benzolsulfonsäure oder Toluolsulfonsäure oder wässrigen Mineralsäuren wie Schwefelsäure oder Salzsäure, einzusetzen.

Als Alkylcarbonate eignen sich vorzugsweise Di-(C₁-C₂₀-alkyl)carbonate, insbesondere Di-(C₁-C₄-alkyl)carbonate, wie Dimethylcarbonat oder Diethylcarbonat.

Die Quaternisierung des Reaktionsschrittes (C) - sei es der isolierten Oligoamine (OA) oder Alkoholamine (AA) oder der (OA)- oder (AA)-Einheiten im bereits amidierten, imidierten oder veresterten Copolymerisat (CP) - wird nach bekannten und hierfür üblichen Arbeitstechniken durchgeführt. Man arbeitet hierbei typischerweise bei Temperaturen im Bereich von 15 bis 180°C, insbesondere von 20 bis 150°C, und bei Normaldruck oder erhöhtem Druck, bei erhöhtem Druck insbesondere bei Verwendung von flüchtigen Quaternisierungsmitteln QM wie kurzkettigen Epoxiden oder Alkylhalogeniden, wobei man zweckmäßigerweise die Quaternisierungsreaktion in einem Druckgefäß oder Autoklaven durchführt. Man kann die Quaternisierungsreaktion in einem inerten organischen Lösungsmittel wie Toluol oder Xylol oder in einem technische Gemische aus höhersiedenden aromatischen Kohlenwasserstoffen, wie sie insbesondere unter der Bezeichnung "Solvesso" im Handel erhältlich sind, beispielsweise in Solvesso 150 oder Solvesso 200, durchführen. Pro Äquivalent an quaternisierbarem tertiären Stickstoffatom setzt man in der Regel 0,1 bis 1,5 Äquivalente, insbesondere 0,5 bis 1,25 Äquivalente, an Quaternisierungsmittel ein, wobei das Quaternierungsmittel eine einzelne chemische Verbindung oder eine Mischung verschiedener zur Quaternisierung geeigneter chemischer Verbindungen sein kann. Im Falle der Mitverwendung von Protonensäuren werden diese üblicherweise äquimolar oder in einem bis zu 2,5-fachen Überschuß zum Quaternisierungsmittel eingesetzt; man kann dabei eine einzelne Protonensäure oder eine Mischung verschiedener Protonensäuren verwenden.

Das erfindungsgemäße quaternisierte Copolymerisat eignet sich in hervorragender Weise als Kraftstoffzusatz und kann im Prinzip in jeglichen Kraftstoffen eingesetzt werden. Es bewirkt eine ganze Reihe von vorteilhaften Effekten beim Betrieb von Verbrennungsmotoren mit Kraftstoffen. Bevorzugt wird das erfindungsgemäße quaternisierte Copolymerisat in Ottokraftstoffen, insbesondere jedoch in Mitteldestillat-Kraftstoffen eingesetzt.

Gegenstand der vorliegenden Erfindung sind daher auch Kraftstoffe, insbesondere Mitteldestillat-Kraftstoffe, mit einem als Zusatzstoff zur Erzielung von vorteilhaften Effekten beim Betrieb von Verbrennungsmotoren, beispielsweise von Dieselmotoren, insbesondere von direkteinspritzenden Dieselmotoren, vor allem von Dieselmotoren mit Common-Rail-Einspritzsystemen, wirksamen Gehalt an dem erfindungsgemäßen quaternisierten Copolymerisat. Dieser wirksame Gehalt (Dosierrate) liegt in der Regel bei 10 bis 5000 Gew.-ppm, vorzugsweise bei 20 bis 1500 Gew.-ppm, insbesondere bei 25 bis 1000 Gew.-ppm, vor allem bei 30 bis 750 Gew.-ppm, jeweils bezogen auf die Gesamtmenge an Kraftstoff.

Der mit dem erfindungsgemäßen quaternisierten Copolymerisat additivierte Kraftstoff ist meist ein Ottokraftstoff oder insbesondere ein Mitteldestillat-Kraftstoff, vor allem ein Dieselkraftstoff. Der Kraftstoff kann weitere übliche Additive zur Wirksamkeitsverbesserung und Verschleißunterdrückung enthalten. Hier sind in erster Linie übliche Detergens-Additive, Trägeröle, Schmierfähigkeitsverbesserer (Lubricity-Additive), Cetanzahlverbesserer, Leitfähigkeitsverbesserer, Korrosionsschutz-Additive, Antischaummittel und Dehazer zu nennen.

Vorzugsweise handelt es sich bei den üblichen Detergens-Additiven um amphiphile Substanzen, die mindestens einen hydrophoben Kohlenwasserstoffrest mit einem zahlengemittelten Molekulargewicht (Mₙ) von 85 bis 20.000 und mindestens eine polare Gruppierung besitzen, die ausgewählt ist unter:
(Da) Mono- oder Polyaminogruppen mit bis zu 6 Stickstoffatomen, wobei mindestens ein Stickstoffatom basische Eigenschaften hat;
(Db) Nitrogruppen, gegebenenfalls in Kombination mit Hydroxylgruppen;
(Dc) Hydroxylgruppen in Kombination mit Mono- oder Polyaminogruppen, wobei mindestens ein Stickstoffatom basische Eigenschaften hat;
(Dd) Carboxylgruppen oder deren Alkalimetall- oder Erdalkalimetallsalzen;
(De) Sulfonsäuregruppen oder deren Alkalimetall- oder Erdalkalimetallsalzen;
(Df) Polyoxy-C₂- bis C₄-alkylengruppierungen, die durch Hydroxylgruppen, Mono- oder Polyaminogruppen, wobei mindestens ein Stickstoffatom basische Eigenschaften hat, oder durch Carbamatgruppen terminiert sind;
(Dg) Carbonsäureestergruppen;
(Dh) aus Bernsteinsäureanhydrid abgeleiteten Gruppierungen mit Hydroxy- und/oder Amino- und/oder Amido- und/oder Imidogruppen; und/oder
(Di) durch Mannich-Umsetzung von substituierten Phenolen mit Aldehyden und Mono- oder Polyaminen erzeugten Gruppierungen.

Der hydrophobe Kohlenwasserstoffrest in den obigen Detergens-Additiven, welcher für die ausreichende Löslichkeit im Kraftstoff sorgt, hat ein zahlengemitteltes Molekulargewicht (Mₙ) von 85 bis 20.000, vorzugsweise von 113 bis 10.000, besonders bevorzugt von 300 bis 5000, stärker bevorzugt von 300 bis 3000, noch stärker bevorzugt von 500 bis 2500 und insbesondere von 700 bis 2500, vor allem von 800 bis 1500. Als typischer hydrophober Kohlenwasserstoffrest, insbesondere in Verbindung mit den polaren insbesondere Polypropenyl-, Polybutenyl- und Polyisobutenylreste mit einem zahlenmittleren Molekulargewicht Mₙ von vorzugsweise jeweils 300 bis 5000, besonders bevorzugt 300 bis 3000, stärker bevorzugt 500 bis 2500 noch stärker bevorzugt 700 bis 2500 und insbesondere 800 bis 1500 in Betracht.

### Als Beispiele für obige Gruppen von Detergens-Additiven seien die folgenden genannt:

Mono- oder Polyaminogruppen (Da) enthaltende Additive sind vorzugsweise Polyalkenmono- oder Polyalkenpolyamine auf Basis von Polypropen oder von hochreaktivem (d.h. mit überwiegend endständigen Doppelbindungen) oder konventionellem (d.h. mit überwiegend mittenständigen Doppelbindungen) Polybuten oder Polyisobuten mit Mₙ = 300 bis 5000, besonders bevorzugt 500 bis 2500 und insbesondere 700 bis 2500. Derartige Additive auf Basis von hochreaktivem Polyisobuten, welche aus dem Polyisobuten, das bis zu 20 Gew.-% n-Buten-Einheiten enthalten kann, durch Hydroformylierung und reduktive Aminierung mit Ammoniak, Monoaminen oder Polyaminen wie Dimethylaminopropylamin, Ethylendiamin, Diethylentriamin, Triethylentetramin oder Tetraethylenpentamin hergestellt werden können, sind insbesondere aus der EP-A244 616 bekannt. Geht man bei der Herstellung der Additive von Polybuten oder Polyisobuten mit überwiegend mittenständigen Doppelbindungen (meist in der β- und γ-Position) aus, bietet sich der Herstellweg durch Chlorierung und anschließende Aminierung oder durch Oxidation der Doppelbindung mit Luft oder Ozon zur Carbonyl- oder Carboxylverbindung und anschließende Aminierung unter reduktiven (hydrierenden) Bedingungen an. Zur Aminierung können hier Amine, wie z. B. Ammoniak, Monoamine oder die oben genannten Polyamine, eingesetzt werden. Entsprechende Additive auf Basis von Polypropen sind insbesondere in der WO-A 94/24231 beschrieben.

Weitere bevorzugte Monoaminogruppen (Da) enthaltende Additive sind die Hydrierungsprodukte der Umsetzungsprodukte aus Polyisobutenen mit einem mittleren Polymerisationsgrad P = 5 bis 100 mit Stickoxiden oder Gemischen aus Stickoxiden und Sauerstoff, wie sie insbesondere in der WO-A 97/03946 beschrieben sind.

Weitere bevorzugte Monoaminogruppen (Da) enthaltende Additive sind die aus Polyisobutenepoxiden durch Umsetzung mit Aminen und nachfolgender Dehydratisierung und Reduktion der Aminoalkohole erhältlichen Verbindungen, wie sie insbesondere in der DE-A 196 20 262 beschrieben sind.

Nitrogruppen (Db), gegebenenfalls in Kombination mit Hydroxylgruppen, enthaltende Additive sind vorzugsweise Umsetzungsprodukte aus Polyisobutenen des mittleren Polymerisationsgrades P = 5 bis 100 oder 10 bis 100 mit Stickoxiden oder Gemischen aus Stickoxiden und Sauerstoff, wie sie insbesondere in der WO-A96/03367 und in der WO-A 96/03479 beschrieben sind. Diese Umsetzungsprodukte stellen in der Regel Mischungen aus reinen Nitropolyisobutenen (z. B. α,β-Dinitropolyisobuten) und gemischten Hydroxynitropolyisobutenen (z. B. α-Nitro-β-hydroxypolyisobuten) dar.

Hydroxylgruppen in Kombination mit Mono- oder Polyaminogruppen (Dc) enthaltende Additive sind insbesondere Umsetzungsprodukte von Polyisobutenepoxiden, erhältlich aus vorzugsweise überwiegend endständige Doppelbindungen aufweisendem Polyisobuten mit Mₙ = 300 bis 5000 mit Ammoniak, Mono- oder Polyaminen, wie sie insbesondere in der EP-A 476 485 beschrieben sind.

Carboxylgruppen oder deren Alkalimetall- oder Erdalkalimetallsalze (Dd) enthaltende Additive sind vorzugsweise Copolymere von C₂- bis C₄₀-Olefinen mit Maleinsäureanhydrid mit einer Gesamt-Molmasse von 500 bis 20.000, deren Carboxylgruppen ganz oder teilweise zu den Alkalimetall- oder Erdalkalimetallsalzen und ein verbleibender Rest der Carboxylgruppen mit Alkoholen oder Aminen umgesetzt sind. Solche Additive sind insbesondere aus der EP-A 307 815 bekannt. Derartige Additive dienen hauptsächlich zur Verhinderung von Ventilsitzverschleiß und können, wie in der WO-A 87/01126 beschrieben, mit Vorteil in Kombination mit üblichen Kraftstoffdetergenzien wie Poly(iso)-butenaminen oder Polyetheraminen eingesetzt werden.

Sulfonsäuregruppen oder deren Alkalimetall- oder Erdalkalimetallsalze (De) enthaltende Additive sind vorzugsweise Alkalimetall- oder Erdalkalimetallsalze eines Sulfobernsteinsäurealkylesters, wie er insbesondere in der EP-A 639 632 beschrieben ist. Derartige Additive dienen hauptsächlich zur Verhinderung von Ventilsitzverschleiß und können mit Vorteil in Kombination mit üblichen Kraftstoffdetergenzien wie Poly(iso)butenaminen oder Polyetheraminen eingesetzt werden.

Polyoxy-C₂- bis C₄-alkylengruppierungen (Df) enthaltende Additive sind vorzugsweise Polyether oder Polyetheramine, welche durch Umsetzung von C₂- bis C₆₀-Alkanolen, C₆- bis C₃₀-Alkandiolen, Mono- oder Di-C₂- bis C₃₀-alkylaminen, C₁- bis C₃₀-Alkylcyclohexanolen oder C₁- bis C₃₀-Alkylphenolen mit 1 bis 30 mol Ethylenoxid und/oder Propylenoxid und/oder Butylenoxid pro Hydroxylgruppe oder Aminogruppe und, im Falle der Polyetheramine, durch anschließende reduktive Aminierung mit Ammoniak, Monoaminen oder Polyaminen erhältlich sind. Derartige Produkte werden insbesondere in der EP-A310 875, EP-A 356 725, EP-A 985 und US-A 4 877 416 beschrieben. Im Falle von Polyethern erfüllen solche Produkte auch Trägeröleigenschaften. Typische Beispiele hierfür sind Tridecanol- oder Isotridecanolbutoxylate, Isononylphenolbutoxylate sowie Polyisobutenolbutoxylate und -propoxylate sowie die entsprechenden Umsetzungsprodukte mit Ammoniak.

Carbonsäureestergruppen (Dg) enthaltende Additive sind vorzugsweise Ester aus Mono-, Di- oder Tricarbonsäuren mit langkettigen Alkanolen oder Polyolen, insbesondere solche mit einer Mindestviskosität von 2 mm²/s bei 100 °C, wie sie insbesondere in der DE-A 38 38 918 beschrieben sind. Als Mono-, Di- oder Tricarbonsäuren können aliphatische oder aromatische Säuren eingesetzt werden, als Esteralkohole bzw. -polyole eignen sich vor allem langkettige Vertreter mit beispielsweise 6 bis 24 C-Atomen. Typische Vertreter der Ester sind Adipate, Phthalate, iso-Phthalate, Terephthalate und Trimellitate des iso-Octanols, iso-Nonanols, iso-Decanols und des iso-Tridecanols. Derartige Produkte erfüllen auch Trägeröleigenschaften.

Aus Bernsteinsäureanhydrid abgeleitete Gruppierungen mit Hydroxy- und/oder Amino- und/oder Amido- und/oder insbesondere Imidogruppen (Dh) enthaltende Additive sind vorzugsweise entsprechende Derivate von Alkyl- oder Alkenyl-substituiertem Bernsteinsäureanhydrid und insbesondere die entsprechenden Derivate von Polyisobutenylbernsteinsäureanhydrid, welche durch Umsetzung von konventionellem oder hochreaktivem Polyisobuten mit Mₙ = vorzugsweise 300 bis 5000, besonders bevorzugt 300 bis 3000, stärker bevorzugt 500 bis 2500, noch stärker bevorzugt 700 bis 2500 und insbesondere 800 bis 1500, mit Maleinsäureanhydrid auf thermischem Weg in einer En-Reaktion oder über das chlorierte Polyisobuten erhältlich sind. Bei den Gruppierungen mit Hydroxy- und/oder Amino- und/oder Amido- und/oder Imidogruppen handelt es sich beispielsweise um Carbonsäuregruppen, Säureamide von Monoaminen, Säureamide von Di- oder Polyaminen, die neben der Amidfunktion noch freie Amingruppen aufweisen, Bernsteinsäurederivate mit einer Säure- und einer Amidfunktion, Carbonsäureimide mit Monoaminen, Carbonsäureimide mit Di- oder Polyaminen, die neben der Imidfunktion noch freie Amingruppen aufweisen, oder Diimide, die durch die Umsetzung von Di- oder Polyaminen mit zwei Bernsteinsäurederivaten gebildet werden. Beim Vorliegen von Imidogruppierungen D(h) wird das weitere Detergens-Additiv im Sinne der vorliegenden Erfindung jedoch nur bis maximal 100 % der Gewichtsmenge an Verbindungen mit Betainstruktur eingesetzt. Derartige Kraftstoffadditive sind allgemein bekannt und beispielsweise in den Dokumenten (1) und (2) beschrieben. Bevorzugt handelt es sich um die Umsetzungsprodukte von Alkyl- oder Alkenyl-substituierten Bernsteinsäuren oder Derivaten davon mit Aminen und besonders bevorzugt um die Umsetzungsprodukte von Polyisobutenyl-substituierten Bernsteinsäuren oder Derivaten davon mit Aminen. Von besonderem Interesse sind hierbei Umsetzungsprodukte mit aliphatischen Polyaminen (Polyalkylenimine) wie insbesondere Ethylendiamin, Diethylentriamin, Triethylentetramin, Tetraethylenpentamin, Pentaethylenhexamin und Hexaethylenheptamin, welche eine Imidstruktur aufweisen.

Durch Mannich-Umsetzung von substituierten Phenolen mit Aldehyden und Mono- oder Polyaminen erzeugte Gruppierungen (Di) enthaltende Additive sind vorzugsweise Umsetzungsprodukte von Polyisobuten-substituierten Phenolen mit Formaldehyd und Mono- oder Polyaminen wie Ethylendiamin, Diethylentriamin, Triethylentetramin, Tetraethylenpentamin oder Dimethylaminopropylamin. Die Polyisobutenyl-substituierten Phenole können aus konventionellem oder hochreaktivem Polyisobuten mit Mₙ = 300 bis 5000 stammen. Derartige "Polyisobuten-Mannichbasen" sind insbesondere in der EP-A 831 141 beschrieben.

Dem Kraftstoff können ein oder mehrere der genannten Detergens-Additive in solch einer Menge zugegeben werden, dass die Dosierrate an diesen Detergens-Additiven vozugsweise 25 bis 2500 Gew.-ppm, insbesondere 75 bis 1500 Gew.-ppm, vor allem 150 bis 1000 Gew.-ppm, beträgt.

Mitverwendete Trägeröle können mineralischer oder synthetischer Natur sein. Geeignete mineralische Trägeröle sind bei der Erdölverarbeitung anfallende Fraktionen, wie Brightstock oder Grundöle mit Viskositäten wie beispielsweise aus der Klasse SN 500 bis 2000, aber auch aromatische Kohlenwasserstoffe, paraffinische Kohlenwasserstoffe und Alkoxyalkanole. Brauchbar ist ebenfalls eine als "hydrocrack oil" bekannte und bei der Raffination von Mineralöl anfallende Fraktion (Vakuumdestillatschnitt mit einem Siedebereich von etwa 360 bis 500 °C, erhältlich aus unter Hochdruck katalytisch hydriertem und isomerisiertem sowie entparaffiniertem natürlichen Mineralöl). Ebenfalls geeignet sind Mischungen oben genannter mineralischer Trägeröle.

Beispiele für geeignete synthetische Trägeröle sind Polyolefine (Polyalphaolefine oder Polyinternalolefine), (Poly)ester, Poly)alkoxylate, Polyether, aliphatische Polyetheramine, alkylphenolgestartete Polyether, alkylphenolgestartete Polyetheramine und Carbonsäureester langkettiger Alkanole.

Beispiele für geeignete Polyolefine sind Olefinpolymerisate mit Mₙ = 400 bis 1800, vor allem auf Polybuten- oder Polyisobuten-Basis (hydriert oder nicht hydriert).

Beispiele für geeignete Polyether oder Polyetheramine sind vorzugsweise Polyoxy-C₂-bis C₄-alkylengruppierungen enthaltende Verbindungen, welche durch Umsetzung von C₂- bis C₆₀-Alkanolen, C₆- bis C₃₀-Alkandiolen, Mono- oder Di-C₂- bis C₃₀-alkylaminen, C₁- bis C₃₀-Alkyl-cyclohexanolen oder C₁- bis C₃₀-Alkylphenolen mit 1 bis 30 mol Ethylenoxid und/ oder Propylenoxid und/oder Butylenoxid pro Hydroxylgruppe oder Aminogruppe und, im Falle der Polyetheramine, durch anschließende reduktive Aminierung mit Ammoniak, Monoaminen oder Polyaminen erhältlich sind. Derartige Produkte werden insbesondere in der EP-A 310 875, EP-A 356 725, EP-A 700 985 und der US-A 4,877,416 beschrieben. Beispielsweise können als Polyetheramine Poly-C₂- bis C₆-Alkylenoxidamine oder funktionelle Derivate davon verwendet werden. Typische Beispiele hierfür sind Tridecanol- oder Isotridecanolbutoxylate, Isononylphenolbutoxylate sowie Polyisobutenolbutoxylate und -propoxylate sowie die entsprechenden Umsetzungsprodukte mit Ammoniak.

Beispiele für Carbonsäureester langkettiger Alkanole sind insbesondere Ester aus Mono-, Di- oder Tricarbonsäuren mit langkettigen Alkanolen oder Polyolen, wie sie insbesondere in der DE-A 38 38 918 beschrieben sind. Als Mono-, Di- oder Tricarbonsäuren können aliphatische oder aromatische Säuren eingesetzt werden, als Esteralkohole bzw. -polyole eignen sich vor allem langkettige Vertreter mit beispielsweise 6 bis 24 Kohlenstoffatomen. Typische Vertreter der Ester sind Adipate, Phthalate, iso-Phthalate, Terephthalate und Trimellitate des Isooctanols, Isononanols, Isodecanols und des Iso-tridecanols, z. B. Di-(n- oder Isotridecyl)phthalat.

Weitere geeignete Trägerölsysteme sind beispielsweise in der DE-A 38 26 608, DE-A 41 42 241, DE-A 43 09 074, EP-A 452 328 und der EP-A 548 617 beschrieben.

Beispiele für besonders geeignete synthetische Trägeröle sind alkoholgestartete Polyether mit etwa 5 bis 35, vorzugsweise etwa 5 bis 30, besonders bevorzugt 10 bis 30 und insbesondere 15 bis 30 C₃- bis C₆-Alkylenoxideinheiten, z. B. Propylenoxid-, n-Butylenoxid- und Isobutylenoxid-Einheiten oder Gemischen davon, pro Alkoholmolekül. Nichtlimitierende Beispiele für geeignete Starteralkohole sind langkettige Alkanole oder mit langkettigem Alkyl-substituierte Phenole, wobei der langkettige Alkylrest insbesondere für einen geradkettigen oder verzweigten C₆- bis C₁₈-Alkylrest steht. Als bevorzugte Beispiele sind zu nennen Tridecanol und Nonylphenol. Besonders bevorzugte alkoholgestartete Polyether sind die Umsetzungsprodukte (Polyveretherungsprodukte) von einwertigen aliphatischen C₆- bis C₁₈-Alkoholen mit C₃- bis C₆-Alkylenoxiden. Beispiele für einwertige aliphatische C₆-C₁₈-Alkohole sind Hexanol, Heptanol, Octanol, 2-Ethylhexanol, Nonylalkohol, Decanol, 3-Propylheptanol, Undecanol, Dodecanol, Tridecanol, Tetradecanol, Pentadecanol, Hexadecanol, Octadecanol und deren Konstitutions- und Stellungsisomere. Die Alkohole können sowohl in Form der reinen Isomere als auch in Form technischer Gemische eingesetzt werden. Ein besonders bevorzugter Alkohol ist Tridecanol. Beispiele für C₃- bis C₆-Alkylenoxide sind Propylenoxid, wie 1,2-Propylenoxid, Butylenoxid, wie 1,2-Butylenoxid, 2,3-Butylenoxid, Isobutylenoxid oder Tetrahydrofuran, Pentylenoxid und Hexylenoxid. Besonders bevorzugt sind hierunter C₃- bis C₄-Alkylenoxide, d.h. Propylenoxid wie 1,2-Propylenoxid und Butylenoxid wie 1,2-Butylenoxid, 2,3-Butylenoxid und Isobutylenoxid. Speziell verwendet man Butylenoxid.

Weitere geeignete synthetische Trägeröle sind alkoxylierte Alkylphenole, wie sie in der DE-A 10 102 913 beschrieben sind.

Bevorzugte Trägeröle sind synthetische Trägeröle, wobei die zuvor beschriebenen alkoholgestarteten Polyether besonders bevorzugt sind.

Das Trägeröl bzw. das Gemisch verschiedener Trägeröle wird dem Kraftstoff in einer Menge von vorzugsweise 1 bis 1000 Gew.-ppm, besonders bevorzugt von 10 bis 500 Gew.-ppm und insbesondere von 20 bis 100 Gew.-ppm zugesetzt.

Außerdem kann der Kraftstoff weitere übliche Additive und Co-Additive in den hierfür üblichen Mengen enthalten. Im Falle von Mitteldestillat-Kraftstoffen, insbesondere Dieselkraftstoffen, sind dies vor allem Kaltfließverbesserer, Schmierfähigkeitsverbesserer (Lubricity Improver), Korrosionsinhibitoren, Demulgatoren, Dehazer, Antischaummittel, Cetanzahlverbesserer, Verbrennungsverbesserer, Antioxidantien oder Stabilisatoren, Antistatika, Metallocene, Metalldeaktivatoren, Farbstoffe und/oder Lösungsmittel. Im Falle von Ottokraftstoffen sind dies vor allem Schmierfähigkeitsverbesserer (Friction Modifier), Korrosionsinhibitoren, Demulgatoren, Dehazer, Antischaummittel, Verbrennungsverbesserer, Antioxidantien oder Stabilisatoren, Antistatika, Metallocene, Metalldeaktivatoren, Farbstoffe und/oder Lösungsmittel.

Geeignete Kaltfließverbesserer sind im Prinzip alle organischen Verbindungen, welche in der Lage sind, das Fließverhalten von Mitteldestillat-Kraftstoffen bzw. Dieselkraftstoffen in der Kälte zu verbessern. Zweckmäßigerweise müssen sie eine ausreichende Öllöslichkeit aufweisen. Insbesondere kommen hierfür die üblicherweise bei Mitteldestillaten aus fossilem Ursprung, also bei üblichen mineralischen Dieselkraftstoffen, eingesetzten Kaltfließverbesserer ("middle distillate flow improvers", "MDFI") in Betracht. Jedoch können auch organische Verbindungen verwendet werden, die beim Einsatz in üblichen Dieselkraftstoffen zum Teil oder überwiegend die Eigenschaften eines Wax Anti-Settling Additivs ("WASA") aufweisen. Auch können sie zum Teil oder überwiegend als Nukleatoren wirken. Es können aber auch Mischungen aus als MDFI wirksamen und/oder als WASA wirksamen und/oder als Nukleatoren wirksamen organischen Verbindungen eingesetzt werden.

Typischerweise wird der Kaltfließverbesserer ausgewählt aus:
(K1) Copolymeren eines C₂- bis C₄₀-Olefins mit wenigstens einem weiteren ethylenisch ungesättigten Monomer;
(K2) Kammpolymeren;
(K3) Polyoxyalkylenen;
(K4) polaren Stickstoffverbindungen;
(K5) Sulfocarbonsäuren oder Sulfonsäuren oder deren Derivaten; und
(K6) Poly(meth)acrylsäureestern.

Es können sowohl Mischungen verschiedener Vertreter aus einer der jeweiligen Klassen (K1) bis (K6) als auch Mischungen von Vertretern aus verschiedenen Klassen (K1) bis (K6) eingesetzt werden.

Geeignete C₂- bis C₄₀-Olefin-Monomere für die Copolymeren der Klasse (K1) sind beispielsweise solche mit 2 bis 20, insbesondere 2 bis10 Kohlenstoffatomen sowie mit 1 bis 3, vorzugsweise mit 1 oder 2, insbesondere mit einer Kohlenstoff-Kohlenstoff-Doppelbindung. Im zuletzt genannten Fall kann die Kohlenstoff-Kohlenstoff-Doppelbindung sowohl terminal (α-Olefine) als auch intern angeordnet sein kann. Bevorzugt sind jedoch α-Olefine, besonders bevorzugt α-Olefine mit 2 bis 6 Kohlenstoffatomen, beispielsweise Propen, 1-Buten, 1-Penten, 1-Hexen und vor allem Ethylen.

Bei den Copolymeren der Klasse (K1) ist das wenigstens eine weitere ethylenisch ungesättigte Monomer vorzugsweise ausgewählt unter Carbonsäurealkenylestern, (Meth)Acrylsäureestern und weiteren Olefinen.

Werden weitere Olefine mit einpolymerisiert, sind dies vorzugsweise höhermolekulare als das oben genannte C₂- bis C₄₀-Olefin-Basismonomere. Setzt man beispielsweise als Olefin-Basismonomer Ethylen oder Propen ein, eignen sich als weitere Olefine insbesondere C₁₀- bis C₄₀-α-Olefine. Weitere Olefine werden in den meisten Fällen nur dann mit einpolymerisiert, wenn auch Monomere mit Carbonsäureester-Funktionen eingesetzt werden.

Geeignete (Meth)Acrylsäureester sind beispielsweise Ester der (Meth)Acrylsäure mit C₁- bis C₂₀-Alkanolen, insbesondere C₁- bis C₁₀-Alkanolen, vor allem mit Methanol, Ethanol, Propanol, Isopropanol, n-Butanol, sec.-Butanol, Isobutanol, tert.-Butanol, Pentanol, Hexanol, Heptanol, Octanol, 2-Ethylhexanol, Nonanol und Decanol sowie Strukturisomeren hiervon.

Geeignete Carbonsäurealkenylester sind beispielsweise C₂- bis C₁₄-Alkenylester, z.B. die Vinyl- und Propenylester, von Carbonsäuren mit 2 bis 21 Kohlenstoffatomen, deren Kohlenwasserstoffrest linear oder verzweigt sein kann. Bevorzugt sind hierunter die Vinylester. Unter den Carbonsäuren mit verzweigtem Kohlenwasserstoffrest sind solche bevorzugt, deren Verzweigung sich in der α-Position zur Carboxylgruppe befindet, wobei das α-Kohlenstoffatom besonders bevorzugt tertiär ist, d. h. die Carbonsäure eine sogenannte Neocarbonsäure ist. Vorzugsweise ist der Kohlenwasserstoffrest der Carbonsäure jedoch linear.

Beispiele für geeignete Carbonsäurealkenylester sind Vinylacetat, Vinylpropionat, Vinylbutyrat, Vinyl-2-ethylhexanoat, Neopentansäurevinylester, Hexansäurevinylester, Neononansäurevinylester, Neodecansäurevinylester und die entsprechenden Propenyl-ester, wobei die Vinylester bevorzugt sind. Ein besonders bevorzugter Carbonsäurealkenylester ist Vinylacetat; typische hieraus resultierende Copolymere der Gruppe (K1) sind die mit am häufigsten eingesetzten Ethylen-Vinylacetat-Copolymere ("EVA"). Besonders vorteilhaft einsetzbare Ethylen-Vinylacetat-Copolymere und ihre Herstellung sind in der WO 99/29748 beschrieben.

Als Copolymere der Klasse (K1) sind auch solche geeignet, die zwei oder mehrere voneinander verschiedene Carbonsäurealkenylester einpolymerisiert enthalten, wobei diese sich in der Alkenylfunktion und/oder in der Carbonsäuregruppe unterscheiden. Ebenfalls geeignet sind Copolymere, die neben dem/den Carbonsäurealkenylester(n) wenigstens ein Olefin und/oder wenigstens ein (Meth)Acrylsäureester einpolymerisiert enthalten.

Auch Terpolymere aus einem C₂- bis C₄₀-α-Olefin, einem C₁- bis C₂₀-Alkylester einer ethylenisch ungesättigten Monocarbonsäure mit 3 bis 15 Kohlenstoffatomen und einem C₂- bis C₁₄-Alkenylester einer gesättigten Monocarbonsäure mit 2 bis 21 Kohlenstoffatomen sind als Copolymere der Klasse (K1) geeignet. Derartige Terpolymere sind in der WO 2005/054314 beschrieben. Ein typisches derartiges Terpolymer ist aus Ethylen, Acrylsäure-2-ethylhexylester und Vinylacetat aufgebaut.

Das wenigstens eine oder die weiteren ethylenisch ungesättigten Monomeren sind in den Copolymeren der Klasse (K1) in einer Menge von vorzugsweise 1 bis 50 Gew.-%, insbesondere von 10 bis 45 Gew.-% und vor allem von 20 bis 40 Gew.-%, bezogen auf das Gesamtcopolymer, einpolymerisiert. Der gewichtsmäßige Hauptanteil der Monomereinheiten in den Copolymeren der Klasse (K1) stammt somit in der Regel aus den C₂- bis C₄₀-Basis-Olefinen.

Die Copolymere der Klasse (K1) weisen vorzugsweise ein zahlenmittleres Molekulargewicht Mₙ von 1000 bis 20.000, besonders bevorzugt von 1000 bis 10.000 und insbesondere von 1000 bis 8000 auf.

Typische Kammpolymere der Komponente (K2) sind beispielsweise durch die Copolymerisation von Maleinsäureanhydrid oder Fumarsäure mit einem anderen ethylenisch ungesättigten Monomer, beispielsweise mit einem α-Olefin oder einem ungesättigten Ester wie Vinylacetat, und anschließende Veresterung der Anhydrid- bzw. Säurefunktion mit einem Alkohol mit wenigstens 10 Kohlenstoffatomen erhältlich. Weitere geeignete Kammpolymere sind Copolymere von α-Olefinen und veresterten Comonomeren, beispielsweise veresterte Copolymere von Styrol und Maleinsäureanhydrid oder veresterte Copolymere von Styrol und Fumarsäure. Geeignete Kammpolymere können auch Polyfumarate oder Polymaleinate sein. Außerdem sind Homo- und Copolymere von Vinylethern geeignete Kammpolymere. Als Komponente der Klasse (K2) geeignete Kammpolymere sind beispielsweise auch solche, die in der WO 2004/035715 und in "Comb-Like Polymers. Structure and Properties", N. A. Plate und V. P. Shibaev, J. Poly. Sci. Macromolecular Revs. 8, Seiten 117 bis 253 (1974)" beschrieben sind. Auch Gemische von Kammpolymeren sind geeignet.

Als Komponente der Klasse (K3) geeignete Polyoxyalkylene sind beispielsweise Polyoxyalkylenester, Polyoxyalkylenether, gemischte Polyoxyalkylenesterether und Gemische davon. Bevorzugt enthalten diese Polyoxyalkylenverbindungen wenigstens eine, vorzugsweise wenigstens zwei lineare Alkylgruppen mit jeweils 10 bis 30 Kohlenstoffatomen und eine Polyoxyalkylengruppe mit einem zahlenmittleren Molekulargewicht von bis zu 5000. Derartige Polyoxyalkylenverbindungen sind beispielsweise in der EP-A 061 895 sowie in der US 4 491 455 beschrieben. Bevorzugte Polyoxyalkylenverbindungen basieren auf Polyethylenglykolen und Polypropylenglykolen mit einem zahlenmittleren Molekulargewicht von 100 bis 5000. Weiterhin sind Polyoxyalkylenmono- und -diester von Fettsäuren mit 10 bis 30 Kohlenstoffatomen wie Stearinsäure oder Behensäure geeignet.

Als Komponente der Klasse (K4) geeignete polare Stickstoffverbindungen können sowohl ionischer als auch nicht ionischer Natur sein und besitzen vorzugsweise wenigstens einen, insbesondere wenigstens zwei Substituenten in Form eines tertiären Stickstoffatoms der allgemeinen Formel >NR⁷, worin R⁷ für einen C₈- bis C₄₀-Kohlenwasserstoffrest steht. Die Stickstoffsubstituenten können auch quaternisiert, das heißt in kationischer Form, vorliegen. Beispiele für solche Stickstoffverbindungen sind Ammoniumsalze und/oder Amide, die durch die Umsetzung wenigstens eines mit wenigstens einem Kohlenwasserstoffrest substituierten Amins mit einer Carbonsäure mit 1 bis 4 Carboxylgruppen bzw. mit einem geeignetem Derivat davon erhältlich sind. Vorzugsweise enthalten die Amine wenigstens einen linearen C₈- bis C₄₀-Alkylrest. Zur Herstellung der genannten polaren Stickstoffverbindungen geeignete primäre Amine sind beispielsweise Octylamin, Nonylamin, Decylamin, Undecylamin, Dodecylamin, Tetradecylamin und die höheren linearen Homologen, hierzu geeignete sekundäre Amine sind beispielsweise Dioctadecylamin und Methylbehenylamin. Geeignet sind hierzu auch Amingemische, insbesondere großtechnisch zugängliche Amingemische wie Fettamine oder hydrierte Tallamine, wie sie beispielsweise in Ullmanns Encyclopedia of Industrial Chemistry, 6. Auflage, im Kapitel "Amines, aliphatic" beschrieben werden. Für die Umsetzung geeignete Säuren sind beispielsweise Cyclohexan-1,2-dicarbonsäure, Cyclohexen-1,2-dicarbonsäure, Cyclopentan-1,2-dicarbonsäure, Naphthalindicarbonsäure, Phthalsäure, Isophthalsäure, Terephthalsäure und mit langkettigen Kohlenwasserstoffresten substituierte Bernsteinsäuren.

Insbesondere ist die Komponente der Klasse (K4) ein öllösliches Umsetzungsprodukt aus mindestens eine tertiäre Aminogruppe aufweisenden Poly(C₂- bis C₂₀-Carbon-säuren) mit primären oder sekundären Aminen. Die diesem Umsetzungsprodukt zugrundeliegenden mindestens eine tertiäre Aminogruppe aufweisenden Poly(C₂- bis C₂₀-Carbonsäuren) enthalten vorzugsweise mindestens 3 Carboxylgruppen, insbesondere 3 bis 12, vor allem 3 bis 5 Carboxylgruppen. Die Carbonsäure-Einheiten in den Polycarbonsäuren weisen vorzugsweise 2 bis 10 Kohlenstoffatome auf, insbesondere sind es Essigsäure-Einheiten. Die Carbonsäure-Einheiten sind in geeigneter Weise zu den Polycarbonsäuren verknüpft, meist über ein oder mehrere Kohlenstoff- und/oder Stickstoffatome. Vorzugsweise sind sie an tertiäre Stickstoffatome angebunden, die im Falle mehrerer Stickstoffatome über Kohlenwasserstoffketten verbunden sind.

Vorzugsweise ist die Komponente der Klasse (K4) ein öllösliches Umsetzungsprodukt auf Basis von mindestens eine tertiäre Aminogruppe aufweisenden Poly(C₂- bis C₂₀-Carbonsäuren) der allgemeinen Formel IIa oder IIb 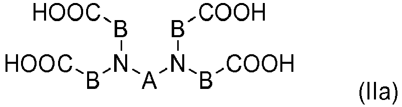 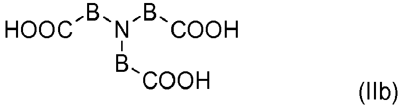 in denen die Variable A eine geradkettige oder verzweigte C₂- bis C₆-Alkylengruppe oder die Gruppierung der Formel III 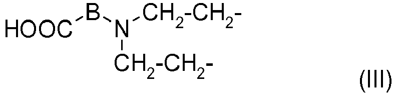 darstellt und die Variable B eine C₁- bis C₁₉-Alkylengruppe bezeichnet. Die Verbindungen der allgemeinen Formel IIa und IIb weisen insbesondere die Eigenschaften eines WASA auf.

Weiterhin ist das bevorzugte öllösliche Umsetzungsprodukt der Komponente (K4), insbesondere das der allgemeinen Formel IIa oder IIb, ein Amid, ein Amidammoniumsalz oder ein Ammoniumsalz, in dem keine, eine oder mehrere Carbonsäuregruppen in Amidgruppen übergeführt sind.

Geradkettige oder verzweigte C₂- bis C₆-Alkylengruppen der Variablen A sind beispielsweise 1,1-Ethylen, 1,2-Propylen, 1,3-Propylen, 1,2-Butylen, 1,3-Butylen, 1,4-Butylen, 2-Methyl-1,3-propylen, 1,5-Pentylen, 2-Methyl-1,4-butylen, 2,2-Dimethyl-1,3-propylen, 1,6-Hexylen (Hexamethylen) und insbesondere 1,2-Ethylen. Vorzugsweise umfasst die Variable A 2 bis 4, insbesondere 2 oder 3 Kohlenstoffatome.

C₁- bis C₁₉-Alkylengruppen der Variablen B sind vor beispielsweise 1,2-Ethylen, 1,3-Propylen, 1,4-Butylen, Hexamethylen, Octamethylen, Decamethylen, Dodecamethylen, Tetradecamethylen, Hexadecamethylen, Octadecamethylen, Nonadecamethylen und insbesondere Methylen. Vorzugsweise umfasst die Variable B 1 bis 10, insbesondere 1 bis 4 Kohlenstoffatome.

Die primären und sekundären Amine als Umsetzungspartner für die Polycarbonsäuren zur Bildung der Komponente (K4) sind üblicherweise Monoamine, insbesondere aliphatische Monoamine. Diese primären und sekundären Amine können aus einer Vielzahl von Aminen ausgewählt sein, die - gegebenenfalls miteinander verbundene - Kohlenwasserstoffreste tragen.

Meist sind diese den öllöslichen Umsetzungsprodukten der Komponente (K4) zugrundeliegenden Amine sekundären Amine und weisen die allgemeine Formel HN(R⁸)₂ auf, in der die beiden Variablen R⁸ unabhängig voneinander jeweils geradkettige oder verzweigte C₁₀- bis C₃₀-Alkylreste, insbesondere C₁₄- bis C₂₄-Alkylreste bedeuten. Diese längerkettigen Alkylreste sind vorzugsweise geradkettig oder nur in geringem Grade verzweigt. In der Regel leiten sich die genannten sekundären Amine hinsichtlich ihrer längerkettigen Alkylreste von natürlich vorkommenden Fettsäure bzw. von deren Derivaten ab. Vorzugsweise sind die beiden Reste R⁸ gleich.

Die genannten sekundären Amine können mittels Amidstrukturen oder in Form der Ammoniumsalze an die Polycarbonsäuren gebunden sein, auch kann nur ein Teil als Amidstrukturen und ein anderer Teil als Ammoniumsalze vorliegen. Vorzugsweise liegen nur wenige oder keine freien Säuregruppen vor. Vorzugsweise liegen die öllöslichen Umsetzungsprodukte der Komponente (K4) vollständig in Form der Amidstrukturen vor.

Typische Beispiele für derartige Komponenten (K4) sind Umsetzungsprodukte der Nitrilotriessigsäure, der Ethylendiamintetraessigsäure oder der Propylen-1,2-diamintetraessigsäure mit jeweils 0,5 bis 1,5 Mol pro Carboxylgruppe, insbesondere 0,8 bis 1,2 Mol pro Carboxylgruppe, Dioleylamin, Dipalmitinamin, Dikokosfettamin, Distearylamin, Dibehenylamin oder insbesondere Ditalgfettamin. Eine besonders bevorzugte Komponente (K4) ist das Umsetzungsprodukt aus 1 Mol Ethylendiamintetraessigsäure und 4 Mol hydriertem Ditalgfettamin.

Als weitere typische Beispiele für die Komponente (K4) seien die N,N-Dialkylammoniumsalze von 2-N',N'-Dialkylamidobenzoaten, beispielsweise das Reaktionsprodukt aus 1 Mol Phthalsäureanhydrid und 2 Mol Ditalgfettamin, wobei letzteres hydriert oder nicht hydriert sein kann, und das Reaktionsprodukt von 1 Mol eines Alkenylspirobislactons mit 2 Mol eines Dialkylamins, beispielsweise Ditalgfettamin und/oder Talgfettamin, wobei die beiden letzteren hydriert oder nicht hydriert sein können, genannt.

Weitere typische Strukturtypen für die Komponente der Klasse (K4) sind cyclische Verbindungen mit tertiären Aminogruppen oder Kondensate langkettiger primärer oder sekundärer Amine mit carbonsäurehaltigen Polymeren, wie sie in der WO 93/18115 beschrieben sind.

Als Kaltfließverbesserer der Komponente der Klasse (K5) geeignete Sulfocarbonsäuren, Sulfonsäuren oder deren Derivate sind beispielsweise die öllöslichen Carbonsäureamide und Carbonsäureester von ortho-Sulfobenzoesäure, in denen die Sulfonsäurefunktion als Sulfonat mit alkylsubstituierten Ammoniumkationen vorliegt, wie sie in der EP-A 261 957 beschrieben werden.

Als Kaltfließverbesserer der Komponente der Klasse (K6) geeignete Poly(meth)acrylsäureester sind sowohl Homo- als auch Copolymere von Acryl- und Methacrylsäureestern. Bevorzugt sind Copolymere von wenigstens zwei voneinander verschiedenen (Meth)Acrylsäureestern, die sich bezüglich des einkondensierten Alkohols unterscheiden. Gegebenenfalls enthält das Copolymer noch ein weiteres, davon verschiedenes olefinisch ungesättigtes Monomer einpolymerisiert. Das gewichtsmittlere Molekulargewicht des Polymers beträgt vorzugsweise 50.000 bis 500.000. Ein besonders bevorzugtes Polymer ist ein Copolymer von Methacrylsäure und Methacrylsäureestern von gesättigten C₁₄- und C₁₅-Alkoholen, wobei die Säuregruppen mit hydriertem Tallamin neutralisiert sind. Geeignete Poly(meth)acrylsäureester sind beispielsweise in der WO 00/44857 beschrieben.

Dem Mitteldestillat-Kraftstoff bzw. Dieselkraftstoff wird der Kaltfließverbesserer bzw. das Gemisch verschiedener Kaltfließverbesserer in einer Gesamtmenge von vorzugsweise 10 bis 5000 Gew.-ppm, besonders bevorzugt von 20 bis 2000 Gew.-ppm, stärker bevorzugt von 50 bis 1000 Gew.-ppm und insbesondere von 100 bis 700 Gew.-ppm, z.B. von 200 bis 500 Gew.-ppm, zugegeben.

Geeignete Schmierfähigkeitsverbesserer (Lubricity Improver bzw. Friction Modifier) basieren üblicherweise auf Fettsäuren oder Fettsäureestern. Typische Beispiele sind Tallölfettsäure, wie beispielsweise in der WO 98/004656 beschrieben, und Glycerinmonooleat. Auch die in der US 6 743 266 B2 beschriebenen Reaktionsprodukte aus natürlichen oder synthetischen Ölen, beispielsweise Triglyceriden, und Alkanolaminen sind als solche Schmierfähigkeitsverbesserer geeignet.

Geeignete Korrosionsinhibitoren sind z.B. Bernsteinsäureester, vor allem mit Polyolen, Fettsäurederivate, z.B. Ölsäureester, oligomerisierte Fettsäuren, substituierte Ethanolamine und Produkte, die unter dem Handelsnamen RC 4801 (Rhein Chemie Mannheim, Deutschland) oder HiTEC 536 (Ethyl Corporation) vertrieben werden.

Geeignete Demulgatoren sind z.B. die Alkali- oder Erdalkalisalze von Alkyl-substituierten Phenol- und Naphthalinsulfonaten und die Alkali- oder Erdalkalisalze von Fettsäuren, außerdem neutrale Verbindungen wie Alkoholalkoxylate, z.B. Alkoholethoxylate, Phenolalkoxylate, z.B. tert-Butylphenolethoxylat oder tert-Pentylphenolethoxylat, Fettsäuren, Alkylphenole, Kondensationsprodunkte von Ethylenoxid (EO) und Propylenoxid (PO), z.B. auch in Form von EO/PO-Blockcopolymeren, Polyethylenimine oder auch Polysiloxane.

Geeignete Dehazer sind z.B. alkoxylierte Phenol-Formaldehyd-Kondensate, wie beispielsweise die unter dem Handelsnamen erhältlichen Produkte NALCO 7D07 (Nalco) und TOLAD 2683 (Petrolite).

Geeignete Antischaummittel sind z.B. Polyether-modifizierte Polysiloxane, wie beispielsweise die unter dem Handelsnamen erhältlichen Produkte TEGOPREN 5851 (Goldschmidt), Q 25907 (Dow Corning) und RHODOSIL (Rhone Poulenc).

Geeignete Cetanzahlverbesserer sind z.B. aliphatische Nitrate wie 2-Ethylhexylnitrat und Cyclohexylnitrat sowie Peroxide wie Di-tert-butylperoxid.

Geeignete Antioxidantien sind z.B. substituierte Phenole, wie 2,6-Di-tert.-butylphenol und 6-Di-tert.-butyl-3-methylphenol sowie Phenylendiamine wie N,N'-Di-sec.-butyl-p-phenylendiamin.

Geeignete Metalldeaktivatoren sind z.B. Salicylsäurederivate wie N,N'-Disalicyliden-1,2-propandiamin.

Geeignete Lösungsmittel sind z.B. unpolare organische Lösungsmittel wie aromatische und aliphatische Kohlenwasserstoffe, beispielsweise Toluol, Xylole, "white spirit" und Produkte, die unter dem Handelsnamen SHELLSOL (Royal Dutch/Shell Group) und EXXSOL (ExxonMobil) vertrieben werden, sowie polare organische Lösungsmittel, beispielsweise Alkohole wie 2-Ethylhexanol, Decanol und Isotridecanol. Derartige Lösungsmittel gelangen meist zusammen mit den vorgenannten Additiven und Co-Additiven, die sie zur besseren Handhabung lösen oder verdünnen sollen, in den Dieselkraftstoff.

Bei Mitteldestillat-Kraftstoffen wie Dieselkraftstoffen oder Heizölen handelt es sich vorzugsweise um Erdölraffinate, die üblicherweise einen Siedebereich von 100 bis 400°C haben. Dies sind meist Destillate mit einem 95%-Punkt bis zu 360°C oder auch darüber hinaus. Dies können aber auch so genannte "Ultra Low Sulfur Diesel" oder "City Diesel" sein, gekennzeichnet durch einen 95%-Punkt von beispielsweise maximal 345°C und einem Schwefelgehalt von maximal 0,005 Gew.-% oder durch einen 95%-Punkt von beispielsweise 285°C und einem Schwefelgehalt von maximal 0,001 Gew.-%. Neben den durch Raffination erhältlichen mineralischen Mitteldestillat-Kraftstoffen bzw. Dieselkraftstoffen sind auch solche, die durch Kohlevergasung oder Gasverflüssigung ["gas to liquid" (GTL)-Kraftstoffe] oder durch Biomasse-Verflüssigung ["biomass to liquid" (BTL)-Kraftstoffe] erhältlich sind, geeignet. Geeignet sind auch Mischungen der vorstehend genannten Mitteldestillat-Kraftstoffe bzw. Dieselkraftstoffe mit regenerativen Kraftstoffen, wie Biodiesel oder Bioethanol.

Die Qualitäten der Heizöle und Dieselkraftstoffe sind beispielsweise in DIN 51603 und EN 590 näher festgelegt (vgl. auch Ullmann's Encyclopedia of Industrial Chemistry, 5. Auflage, Band A12, S. 617 ff.).

Das erfindungsgemäße quaternisierte Copolymerisat kann neben seiner Verwendung in den oben genannten Mitteldestillat-Kraftstoffen aus fossilem, pflanzlichem oder tierischem Ursprung, die im wesentlichen Kohlenwasserstoffmischungen darstellen, auch in Mischungen aus solchen Mitteldestillaten mit Biobrennstoffölen (Biodiesel) eingesetzt werden. Derartige Mischungen werden im Sinne der vorliegenden Erfindung auch von dem Begriff "Mitteldestillat-Kraftstoff" umfasst. Sie sind handelsüblich und enthalten meist die Biobrennstofföle in untergeordneten Mengen, typischerweise in Mengen von 1 bis 30 Gew.-% insbesondere von 3 bis 10 Gew.-%, bezogen auf die Gesamtmenge aus Mitteldestillat fossilen, pflanzlichem oder tierischen Ursprungs und Biobrennstofföl.

Biobrennstofföle basieren in der Regel auf Fettsäureestern, vorzugsweise im wesentlichen auf Alkylester von Fettsäuren, die sich von pflanzlichen und/oder tierischen Ölen und/oder Fetten ableiten. Unter Alkylestern werden üblicherweise Niedrigalkylester, insbesondere C₁- bis C₄-Alkylester, verstanden, die durch Umesterung der in pflanzlichen und/oder tierischen Ölen und/oder Fetten vorkommenden Glyceride, insbesondere Triglyceride, mittels Niedrigalkoholen, beispielsweise Ethanol oder vor allem Methanol ("FAME"), erhältlich sind. Typische Niedrigalkylester auf Basis von pflanzlichen und/oder tierischen Ölen und/oder Fetten, die als Biobrennstofföl oder Komponenten hierfür Verwendung finden, sind beispielsweise Sonnenblumenmethylester, Palmölmethylester ("PME"), Sojaölmethylester ("SME") und insbesondere Rapsölmethylester ("RME").

Besonders bevorzugt handelt es sich bei den Mitteldestillat-Kraftstoffen bzw. Dieselkraftstoffen um solche mit niedrigem Schwefelgehalt, das heißt mit einem Schwefelgehalt von weniger als 0,05 Gew.-%, vorzugsweise von weniger als 0,02 Gew.-%, insbesondere von weniger als 0,005 Gew.-% und speziell von weniger als 0,001 Gew.-% Schwefel.

Als Ottokraftstoffe kommen alle handelsüblichen Ottokraftstoffzusammensetzungen in Betracht. Als typischer Vertreter soll hier der marktübliche Eurosuper Grundkraftstoff gemäß EN 228 genannt werden. Weiterhin sind auch Ottokraftstoffzusammensetzungen der Spezifikation gemäß WO 00/47698 mögliche Einsatzgebiete für die vorliegende Erfindung.

Das erfindungsgemäße quaternisierte Copolymerisat eignet sich insbesondere als Kraftstoffzusatz in Kraftstoffzusammensetzungen, insbesondere in Dieselkraftstoffen, zur Überwindung der eingangs geschilderten Probleme bei direkteinspritzenden Dieselmotoren, vor allem bei solchen mit Common-Rail-Einspritzsystemen.

Gegenstand der vorliegenden Erfindung ist somit auch die Verwendung des erfindungsgemäßen quaternisierten Copolymerisates als Kraftstoffzusatz zur Verringerung oder Verhinderung von Ablagerungen in den Einspritzsystemen, insbesondere in den Injektoren, von direkteinspritzenden Dieselmotoren, insbesondere in Common-Rail-Einspritzsystemen.

Weiterhin ist somit auch Gegenstand der vorliegenden Erfindung die Verwendung des erfindungsgemäßen quaternisierten Copolymerisates als Kraftstoffzusatz zur Verringerung des Kraftstoffverbrauches von direkteinspritzenden Dieselmotoren, insbesondere von Dieselmotoren mit Common-Rail-Einspritzsystemen.

Weiterhin ist somit auch Gegenstand der vorliegenden Erfindung die Verwendung des erfindungsgemäßen quaternisierten Copolymerisates als Kraftstoffzusatz zur Minimierung des Leistungsverlustes (powerloss) in direkteinspritzenden Dieselmotoren, insbesondere iun Dieselmotoren mit Common-Rail-Einspritzsystemen.

Die nachfolgenden Beispiele solchen die Erfindung erläutern ohne sie zu beschränken.

### Herstellungsbeispiel

### Beispiele 1a: Herstellung eines C₂₀₋₂₄-Olefin-1-Maleinsäureanhydrid-Copolymerisates

Das Copolymerisat wurde durch radikalische Lösungspolymerisation gemäß der Lehre der EP-A 307 815 hergestellt. Dazu wurde das C₂₀₋₂₄-Olefin-1 (400 g, entsprechend 1,35 mol) bei 80°C geschmolzen und bei 150°C in Solvesso 150 (400 g) gelöst. Anschließend wurden Di-tert.-Butylperoxid (5,4 g, 0,037 mol), gelöst in Solvesso 150 (30 g), und das in einem auf 70°C temperierten Tropftrichter erwärmte flüssige Maleinsäureanhydrid (132 g, 1,35 mol) gleichzeitig innerhalb von 5 Stunden zur auf die auf 150°C erhitzte Olefin-Lösung in Solvesso 150 getropft. Das erhaltene Copolymerisat besaß eine Verseifungszahl (VZ) von 107,4 mg KOH/g, ein zahlenmittleres Molekulargewicht (Mₙ) von 1470 g/mol, ein gewichtsmittleres Molekulargewicht (M_{w}) von 3290 g/mol und eine Polydispersität (PDI) von 2,2.

### Beispiel 1b: Imidierung des C₂₀₋₂₄-Olefin-1-Maleinsäureanhydrid-Copolymerisates

Das in Beispiel 1a hergestellte Copolymerisat wurde mit 3-(N,N-Dimethylamino)-propylamin im molaren Verhältnis der Carbonsäureanhydrid-Funktionen im Copolymerisat zum Amin von 1:1 zum entsprechenden imidierten Copolymerisat mit wiederkehrenden N-(3-Dimethylaminopropyl)-bernsteinsäureimid-Einheiten umgesetzt. Dazu wurde das in Solvesso 150 gelöste C₂₀₋₂₄-Olefin-1-Maleinsäureanhydrid-Copolymerisat mit dem oben genannten Amin bei 25°C in einer Additionsreaktion umgesetzt. Das resultierende Amid fiel nach kurzer Zeit aus der Reaktionsmischung aus. Die Imidierung erfolgte innerhalb von 2 Stunden bei 170°C und einem Druck von 1 mbar.

### Beispiel 1c: Quaternisierung des imidierten Copolymerisates mit Propylenoxid

Das imidierte Copolymerisat aus Beispiel 1b wurde mit Propylenoxid im einem äquimolaren Verhältnis zum tertiären Stickstoffatom im Oligoamin-Rest in Gegenwart einer äquimolaren Menge an Essigsäure umgesetzt. Dabei wurde das imidierte Copolymerisat in einem Autoklaven in Solvesso 150 gelöst, mit der Essigsäure versetzt und auf 130°C erwärmt. Mit Stickstoff wurde ein Vordruck von 5 bar eingestellt, anschließend wurde das Propylenoxid innerhalb von 20 Minuten zudosiert und es wurden weitere 6 Stunden bei 130°C gerührt. Das quaternisierte Copolymerisat wurde in quantitativer Ausbeute in Form einer dunkel gefärbten Lösung erhalten.

### Anwendungsbeispiel

### Beispiel 2: Messung von Leistungsverlusten im direkteinspritzenden Dieselmotor

Zur Untersuchung des Einflusses des erfindungsgemäßen quaternisierten Terpolymerisates auf die Performance von direkteinspritzenden Dieselmotoren wurde der Leistungsverlust (powerloss) in Anlehnung an die offizielle Testmethode CEC F-98-08 bestimmt. Der Leistungsverlust bzw. der Leistungszuwachs (bei negativen Werten) ist ein direktes Maß für Bildung bzw. Beseitigung von Ablagerungen in den Injektoren. Verwendet wurde ein gebräuchlicher direkteinspritzender Dieselmotor mit Common-Rail-System.

Als Kraftstoff wurde ein handelsüblicher Dieselkraftstoff der Fa. Haltermann (RF-06-03) eingesetzt. Diesem wurden zur künstlichen Anregung der Bildung von Ablagerungen an den Injektoren 1 Gew.-ppm Zink-Didodecanoat zugesetzt.

Die nachfolgende Tabelle zeigt die Ergebnisse der powerloss-Bestimmungen bei 4000 rpm nach jeweils 10 Minuten und 1 Stunde, wobei das quaternisierte Copolymerisat in Form der in Beispiel 1c erhaltenen Lösung eingesetzt wurde:

| Prüflauf-Nr. | Kraftstoffzusatz | Dosierung [Gew.-ppm Wirksubstanz] | powerloss 10 Minuten | powerloss 1 Stunde |
|---|---|---|---|---|
| Grundwert | ohne | - | 3,59% | 1,83 % |
| mit quaternisiertem CP aus Beispiel 1c | | 100 | 0,59 % | -1,50 % |
| mit quaternisiertem CP aus Beispiel 1c | | 200 | -1,76 % | -1,13 % |

## Patentansprüche

1. Verwendung eines quaternisierten Copolymerisates, erhältlich durch die Reaktionsschritte
(A) Copolymerisation eines oder mehrerer geradkettiger, verzweigter oder cyclischer ethylenisch ungesättigter C₂- bis C₁₀₀-Kohlenwasserstoffe (Monomer M1), welche einen oder mehrere sauerstoff- oder stickstofffunktionelle Substituenten, die nicht mit Aminen zu Amiden oder Imiden oder mit Alkoholen zu Estern umsetzbar sind, tragen können, mit einer oder mehreren ethylenisch ungesättigten C₃- bis C₁₂-Carbonsäuren oder C₃- bis C₁₂-Carbonsäure-Derivaten (Monomer M2), welche ein oder zwei Carbonsäurefunktionen tragen und mit Aminen zu Amiden oder Imiden oder mit Alkoholen zu Estern umsetzbar sind, zu einem Copolymerisat (CP) mit einem zahlenmittleren Molekulargewicht Mₙ von 500 bis 20.000, wobei das Molekulargewicht durch Gelpermeationschromatographie bestimmt wird;
(B) teilweise oder vollständige Amidierung oder Imidierung oder Veresterung der Carbonsäurefunktionen der Einheiten (M2) im Copolymerisat (CP) durch Umsetzung mit einem oder mehreren Oligoaminen (OA) mit 2 bis 6 Stickstoffatomen oder Alkoholaminen (AA), welche jeweils mindestens ein primäres oder sekundäres Stickstoffatom bzw. mindestens eine Hydroxylgruppe und mindestens ein quaternisierbares tertiäres Stickstoffatom enthalten;
(C) teilweise oder vollständige Quaternisierung des mindestens einen tertiären Stickstoffatoms in den OA- oder AA-Einheiten mit mindestens einem Quaternisierungsmittel (QM) ausgewählt aus Epoxiden;
wobei die Schritte (B) und (C) auch in umgekehrter Reihenfolge erfolgen können, so dass die teilweise oder vollständige Amidierung oder Imidierung oder Veresterung der Carbonsäurefunktionen der Einheiten (M2) im Copolymerisat (CP) durch Umsetzung mit den bereits gemäß Reaktionsschritt (C) quaternisierten Oligoaminen (OA) oder Alkoholaminen (AA) erfolgen kann,
in einer Menge von 10 bis 5000 Gew.-ppm in Kraftstoffen zum Betrieb von direkteinspritzenden Dieselmotoren.

2. Verwendung eines quaternisierten Copolymerisates nach Anspruch 1, erhältlich durch die Reaktionsschritte (A), (B) und (C), wobei die Monomere (M1) im Reaktionsschritt (A) ausgewählt sind unter C₂- bis C₄₀-Alkenen, C₃- bis C₁₀-Cycloolefinen, Alkylvinylethern mit 1 bis 30 Kohlenstoffatomen in der Alkylgruppe, Cycloalkylvinylethern mit 3 bis 10 Kohlenstoffatomen in der Cycloalkylgruppe und Oligo- bzw. Polyisobutenen mit 8 bis 96 Kohlenstoffatomen.

3. Verwendung eines quaternisierten Copolymerisates nach Anspruch 1 oder 2, erhältlich durch die Reaktionsschritte (A), (B) und (C), wobei die Monomere (M1) im Reaktionsschritt (A) die polymerisierbare ethylenisch ungesättigte Doppelbindung in der α-Position tragen.

4. Verwendung eines quaternisierten Copolymerisates nach den Ansprüchen 1 bis 3, erhältlich durch die Reaktionsschritte (A), (B) und (C), wobei die Monomere (M2) im Reaktionsschritt (A) ausgewählt sind unter Acrylsäure, Methacrylsäure, Maleinsäure, Fumarsäure und Itaconsäure sowie deren Anhydriden, Halogeniden und Estern.

5. Verwendung eines quaternisierten Copolymerisates nach den Ansprüchen 1 bis 4, erhältlich durch die Reaktionsschritte (A), (B) und (C), wobei die Monomer-Einheiten (M1) und (M2) im Gew.-Verhältnis von 30:70 bis 70:30 im Copolymerisat (CP) des Reaktionsschrittes (A) vorliegen.

6. Verwendung eines quaternisierten Copolymerisates nach den Ansprüchen 1 bis 5, erhältlich durch die Reaktionsschritte (A), (B) und (C), wobei als Oligoamine (OA) im Reaktionsschritt (B) Verbindungen der allgemeinen Formel (Ia)
R¹R²N-(CH₂)ₙ-NR³R⁴ (Ia)
in der
die Variablen und R² Wasserstoff oder C₁- bis C₂₀-Alkylgruppen bedeuten, wobei mindestens eine der Variablen und R² Wasserstoff bedeutet,
die Variablen R³ und R⁴ unabhängig voneinander C₁- bis C₂₀-Alkylgruppen bezeichnen oder zusammen mit dem Stickstoffatom, an das sie gebunden sind, einen gesättigten, teilungesättigten oder ungesättigten Fünfring- oder Sechsring-Heterocyclus bilden und
die Variable n für eine Zahl von 1 bis 12, insbesondere von 2 bis 6, vor allem für die Zahl 2 oder 3, steht,
eingesetzt werden.

7. Verwendung eines quaternisierten Copolymerisates nach den Ansprüchen 1 bis 5, erhältlich durch die Reaktionsschritte (A), (B) und (C), wobei als Alkoholamine (AA) im Reaktionsschritt (B) Verbindungen der allgemeinen Formel (Ib)
[HO-(CH₂)ₘ]ₓN(R⁵)_{y}(R⁶)_{z} (Ib)
in der
die Variablen R⁵ und R⁶ unabhängig voneinander C₁- bis C₂₀-Alkylgruppen bezeichnen oder im Falle von y = z = 1 zusammen mit dem Stickstoffatom, an das sie gebunden sind, einen gesättigten, teilungesättigten oder ungesättigten Fünfring- oder Sechsring-Heterocyclus bilden,
die Variable m für eine Zahl von 1 bis 12, insbesondere von 2 bis 6, vor allem für die Zahl 2 oder 3, steht, und
die Variablen x, y und z jeweils für die Zahl 0, 1, 2 oder 3 stehen, wobei die Summe aus x + y + z den Wert 3 ergeben muß,
eingesetzt werden.

8. Verwendung eines quaternisierten Copolymerisates nach den Ansprüchen 1 bis 7 als Kraftstoffzusatz zur Verringerung oder Verhinderung von Ablagerungen in den Einspritzsystemen von direkteinspritzenden Dieselmotoren, insbesonderen in Common-Rail-Einspritzsystemen.

9. Verwendung eines quaternisierten Copolymerisates nach den Ansprüchen 1 bis 7 als Kraftstoffzusatz zur Verringerung des Kraftstoffverbrauches von direkteinspritzenden Dieselmotoren, insbesondere von Dieselmotoren mit Common-Rail-Einspritzsystemen.

10. Verwendung eines quaternisierten Copolymerisates nach den Ansprüchen 1 bis 7 als Kraftstoffzusatz zur Minimierung des Leistungsverlustes (powerloss) in direkteinspritzenden Dieselmotoren, insbesondere in Dieselmotoren mit Common-Rail-Einspritzsystemen.

## Claims

1. The use of a quaternized copolymer obtainable by the reaction steps of
(A) copolymerization of one or more straight-chain, branched or cyclic, ethylenically unsaturated C₂ to C₁₀₀ hydrocarbons (monomer M1), which may bear one or more oxygen- or nitrogen-functional substituents which cannot be reacted with amines to give amides or imides or with alcohols to give esters, with one or more ethylenically unsaturated C₃- to C₁₂-carboxylic acids or C₃- to C₁₂-carboxylic acid derivatives (monomer M2), which bear one or two carboxylic acid functions and can be reacted with amines to give amides or imides or with alcohols to give esters, to give a copolymer (CP) with a number-average molecular weight Mₙ of 500 to 20 000, where the molecular weight is determined by gel permeation chromatography;
(B) partial or full amidation or imidation or esterification of the carboxylic acid functions of the (M2) units in the copolymer (CP) by reacting them with one or more oligoamines (OA) having 2 to 6 nitrogen atoms or alcoholamines (AA), each of which comprises at least one primary or secondary nitrogen atom or at least one hydroxyl group and at least one quaternizable tertiary nitrogen atom;
(C) partial or full quaternization of the at least one tertiary nitrogen atom in the OA or AA units with at least one quaternizing agent (QM) selected from epoxides;
where the sequence of steps (B) and (C) may also be reversed, such that the partial or full amidation or imidation of esterification of the carboxylic acid functions of the (M2) units in the copolymer (CP) can be effected by reacting with the oligoamines (OA) or alcoholamines (AA) already quaternized in reaction step (C),
in an amount of 10 to 5000 ppm by weight in fuels for operation of direct-injection diesel engines.

2. The use of a quaternized copolymer according to claim 1, obtainable by reaction steps (A), (B) and (C), wherein the monomers (M1) in reaction step (A) are selected from C₂- to C₄₀-alkenes, C₃- to C₁₀-cycloolefins, alkyl vinyl ethers having 1 to 30 carbon atoms in the alkyl group, cycloalkyl vinyl ethers having 3 to 10 carbon atoms in the cycloalkyl group and oligo- or polyisobutenes having 8 to 96 carbon atoms.

3. The use of a quaternized copolymer according to claim 1 or 2, obtainable by reaction steps (A), (B) and (C), wherein the monomers (M1) in reaction step (A) bear the polymerizable ethylenically unsaturated double bond in the α position.

4. The use of a quaternized copolymer according to claims 1 to 3, obtainable by reaction steps (A), (B) and (C), wherein the monomers (M2) in reaction step (A) are selected from acrylic acid, methacrylic acid, maleic acid, fumaric acid and itaconic acid, and the anhydrides, halides and esters thereof.

5. The use of a quaternized copolymer according to claims 1 to 4, obtainable by reaction steps (A), (B) and (C), wherein the monomer units (M1) and (M2) are present in a weight ratio of 30:70 to 70:30 in the copolymer (CP) of reaction step (A).

6. The use of a quaternized copolymer according to claims 1 to 5, obtainable by reaction steps (A), (B) and (C), wherein the oligoamines (OA) used in reaction step (B) are compounds of the general formula (Ia)
R¹R²N-(CH₂)ₙ-NR³R⁴ (Ia)
in which
the variables and R² are each hydrogen or C₁- to C₂₀-alkyl groups, where at least one of the variables and R² is hydrogen,
the variables R³ and R⁴ each independently denote C₁-to C₂₀-alkyl groups or, together with the nitrogen atom to which they are bonded, form a saturated, partly unsaturated or unsaturated five-membered or six-membered heterocyclic ring, and
the variable n is from 1 to 12, especially from 2 to 6, in particular 2 or 3.

7. The use of a quaternized copolymer according to claims 1 to 5, obtainable by reaction steps (A), (B) and (C), wherein the alcoholamines (AA) used in reaction step (B) are compounds of the general formula (Ib)
[HO-(CH₂)ₘ]ₓN(R⁵)_{y}(R⁶)_{z} (Ib)
in which
the variables R⁵ and R⁶ each independently denote C₁-to C₂₀-alkyl groups or, in the case that y = z = 1, together with the nitrogen atom to which they are bonded, form a saturated, partly unsaturated or unsaturated five-membered or six-membered heterocyclic ring,
the variable m is from 1 to 12, especially from 2 to 6, in particular 2 or 3, and
the variables x, y and z are each 0, 1, 2 or 3, where the sum of x + y + z must give the value of 3.

8. The use of a quaternized copolymer according to claims 1 to 7 as a fuel additive for reducing or preventing deposits in the injection systems of direct-injection diesel engines, especially in common-rail injection systems.

9. The use of a quaternized copolymer according to claims 1 to 7 as a fuel additive for reducing the fuel consumption of direct-injection diesel engines, especially of diesel engines with common-rail injection systems.

10. The use of a quaternized copolymer according to claims 1 to 7 as a fuel additive for minimizing power loss in direct-injection diesel engines, especially in diesel engines with common-rail injection systems.

## Revendications

1. Utilisation d'un copolymère quaternisé, pouvant être obtenu par les étapes de réaction suivantes :
(A) la copolymérisation d'un ou de plusieurs hydrocarbures en C₂ à C₁₀₀ éthyléniquement insaturés linéaires, ramifiés ou cycliques (monomère M1), qui peuvent porter un ou plusieurs substituants à fonction oxygène ou azote, qui ne peuvent pas réagir avec des amines pour former des amides ou des imides ou avec des alcools pour former des esters, avec un ou plusieurs acides carboxyliques en C₃ à C₁₂ éthyléniquement insaturés ou dérivés d'acides carboxyliques en C₃ à C₁₂ (monomère M2), qui portent une ou deux fonctions acide carboxylique et peuvent réagir avec des amines pour former des amides ou des imides ou avec des alcools pour former des esters, pour former un copolymère (CP) ayant un poids moléculaire moyen en nombre Mₙ de 500 à 20 000, le poids moléculaire étant déterminé par chromatographie par perméation de gel ;
(B) l'amidation ou l'imidation ou l'estérification partielle ou totale des fonctions acide carboxylique des unités (M2) dans le copolymère (CP) par mise en réaction avec une ou plusieurs oligoamines (OA) contenant 2 à 6 atomes d'azote ou alcool-amines (AA), qui contiennent chacune au moins un atome d'azote primaire ou secondaire ou au moins un groupe hydroxyle et au moins un atome d'azote tertiaire quaternisable ;
(C) la quaternisation partielle ou totale dudit au moins un atome d'azote tertiaire dans les unités OA ou AA avec au moins un agent de quaternisation (QM) choisi parmi les époxydes ;
les étapes (B) et (C) pouvant également avoir lieu dans l'ordre inverse, de sorte que l'amidation ou l'imidation ou l'estérification partielle ou totale des fonctions acide carboxylique des unités (M2) dans le copolymère (CP) peut avoir lieu par mise en réaction avec les oligoamines (OA) ou les alcool-amines (AA) déjà quaternisées selon l'étape de réaction (C),
en une quantité de 10 à 5 000 ppm en poids dans des carburants pour l'exploitation de moteurs diesel à injection directe.

2. Utilisation d'un copolymère quaternisé selon la revendication 1, pouvant être obtenu par les étapes de réaction (A), (B) et (C), dans laquelle les monomères (M1) à l'étape de réaction (A) sont choisis parmi les alcènes en C₂ à C₄₀, les cyclooléfines en C₃ à C₁₀, les éthers d'alkylvinyle contenant 1 à 30 atomes de carbone dans le groupe alkyle, les éthers de cycloalkylvinyle contenant 3 à 10 atomes de carbone dans le groupe cycloalkyle et les oligo- ou polyisobutènes contenant 8 à 96 atomes de carbone.

3. Utilisation d'un copolymère quaternisé selon la revendication 1 ou 2, pouvant être obtenu par les étapes de réaction (A), (B) et (C), dans laquelle les monomères (M1) à l'étape de réaction (A) portent la double liaison éthyléniquement insaturée polymérisable en position a.

4. Utilisation d'un copolymère quaternisé selon les revendications 1 à 3, pouvant être obtenu par les étapes de réaction (A), (B) et (C), dans laquelle les monomères (M2) à l'étape de réaction (A) sont choisis parmi l'acide acrylique, l'acide méthacrylique, l'acide maléique, l'acide fumarique et l'acide itaconique, ainsi que leurs anhydrides, halogénures et esters.

5. Utilisation d'un copolymère quaternisé selon les revendications 1 à 4, pouvant être obtenu par les étapes de réaction (A), (B) et (C), dans laquelle les unités monomères (M1) et (M2) sont présentes en un rapport en poids de 30:70 à 70:30 dans le copolymère (CP) de l'étape de réaction (A).

6. Utilisation d'un copolymère quaternisé selon les revendications 1 à 5, pouvant être obtenu par les étapes de réaction (A), (B) et (C), dans laquelle des composés de formule générale (Ia) sont utilisés en tant qu'oligoamines (OA) à l'étape de réaction (B) :
R¹R²N-(CH₂)ₙ-NR³R⁴ (Ia)
dans laquelle
les variables et R² signifient l'hydrogène ou des groupes alkyle en C₁ à C₂₀, au moins une des variables et R² signifiant l'hydrogène,
les variables R³ et R⁴ désignent indépendamment l'une de l'autre des groupes alkyle en C₁ à C₂₀ ou forment ensemble avec l'atome d'azote auquel ils sont reliés un hétérocycle à cinq chaînons ou à six chaînons saturé, partiellement insaturé ou insaturé, et
la variable n représente un nombre de 1 à 12, notamment de 2 à 6, avant tout le nombre 2 ou 3.

7. Utilisation d'un copolymère quaternisé selon les revendications 1 à 5, pouvant être obtenu par les étapes de réaction (A), (B) et (C), dans laquelle des composés de formule générale (Ib) sont utilisés en tant qu'alcool-amines (AA) à l'étape de réaction (B) :
[HO-(CH₂)ₘ]ₓN(R⁵)_{y}(R⁶)_{z} (Ib)
dans laquelle
les variables R⁵ et R⁶ désignent indépendamment l'une de l'autre des groupes alkyle en C₁ à C₂₀ ou, lorsque y = z = 1, forment ensemble avec l'atome d'azote auquel elles sont reliées un hétérocycle à cinq chaînons ou à six chaînons saturé, partiellement insaturé ou insaturé,
la variable m représente un nombre de 1 à 12, notamment de 2 à 6, avant tout le nombre 2 ou 3, et
les variables x, y et z représentent le nombre 0, 1, 2 ou 3, la somme x + y + z devant avoir la valeur 3.

8. Utilisation d'un copolymère quaternisé selon les revendications 1 à 7 en tant qu'additif de carburant pour la réduction ou l'inhibition de dépôts dans les systèmes d'injection de moteurs diesel à injection directe, notamment dans des systèmes d'injection à rampe commune.

9. Utilisation d'un copolymère quaternisé selon les revendications 1 à 7 en tant qu'additif de carburant pour la réduction de la consommation de carburant de moteurs diesel à injection directe, notamment de moteurs diesel à systèmes d'injection à rampe commune.

10. Utilisation d'un copolymère quaternisé selon les revendications 1 à 7 en tant qu'additif de carburant pour la minimisation de la perte de puissance (powerloss) dans des moteurs diesel à injection directe, notamment dans des moteurs diesel à systèmes d'injection à rampe commune.
